# EUROPEAN PATENT SPECIFICATION

(11) **EP 1 668 954 B1**
(45) Date of publication and mention of the grant of the patent: **07.07.2010**
(21) Application number: 04789371.4
(22) Date of filing: 29.09.2004
(51) Int. Cl.: H04Q 11/00

(54) **USING AN EXTENDED BORDER GATEWAY PROTOCOL FOR ROUTING ACROSS OPTICAL-BURST-SWITCHED NETWORKS**
VERWENDUNG EINES ERWEITERTEN GRENZ-GATEWAY-PROTOKOLLS ZUM ROUTEN ÜBER LICHTBURSTVERMITTELTE NETZWERKE HINWEG
ROUTAGE DANS UN RESEAU A COMMUTATION OPTIQUE PAR RAFALES EN UTILISANT UN PROTOCOLE DE PASSERELLE A BORD ETENDU

(30) Priority: 30.09.2003 US 674650
(43) Date of publication of application: 14.06.2006
(73) Proprietor: Intel Corporation, Santa Clara, CA 95052 (US)
(72) Inventor: OVADIA, Shlomo, San Jose, CA 95125 (US); MACIOCCO, Christian, Tigard, OR 97223 (US)
(74) Representative: Want, Clifford James
(86) International application number: PCT/US2004/032215
(87) International publication number: WO 2005/034569

(56) References cited:
- US-A1- 2002 109 878
- REKHTER Y ET AL: "A Border Gateway Protocol 4 (BGP-4)" IETF REQUEST FOR COMMENTS 1771, March 1995 (1995-03), XP002226832
- YOO S J B: "OPTICAL-LABEL SWITCHING, MPLS, MPLAMBDAS, AND GMPLS" OPTICAL NETWORKS MAGAZINE, SPIE, BELLINGHAM, WA, US, vol. 4, no. 3, May 2003 (2003-05), pages 17-31, XP001162964 ISSN: 1388-6916
- COMELLAS J ET AL: "INTEGRATED IP/WDM ROUTING IN GMPLS-BASED OPTICAL NETWORKS" IEEE NETWORK, IEEE INC. NEW YORK, US, vol. 17, no. 2, March 2003 (2003-03), pages 22-27, XP001149576 ISSN: 0890-8044
- GHANI N ET AL: "ON IP-OVER-WDM INTEGRATION" IEEE COMMUNICATIONS MAGAZINE, IEEE SERVICE CENTER. PISCATAWAY, N.J, US, vol. 38, no. 3, March 2000 (2000-03), pages 72-84, XP000948526 ISSN: 0163-6804

## Description

### FIELD OF THE INVENTION

The field of invention relates generally to optical networks in general; and, more specifically, to techniques for routing between optical-switched networks.

### BACKGROUND INFORMATION

Transmission bandwidth demands in telecommunication networks (*e*.*g*., the Internet) appear to be ever increasing and solutions are being sought to support this bandwidth demand. One solution to this problem is to use fiber-optic networks, where wavelength-division-multiplexing (WDM) technology is used to support the ever-growing demand in optical networks for higher data rates.

Conventional optical switched networks typically use wavelength routing techniques, which require that optical-electrical-optical (O-E-O) conversion of optical signals be done at the optical switching node. O-E-O conversion at each switching node in the optical network is not only very slow operation (typically about ten milliseconds), but it is very costly, power-consuming operation that potentially creates a traffic bottleneck for the optical switched network. In addition, the current optical switch technologies cannot efficiently support "bursty" traffic that is often experienced in packet communication applications (*e.g.*, the Internet).

A large enterprise data network can be implemented using many sub-networks. For example, a large enterprise network to support data traffic can be segmented into a large number of relatively small access networks, which are coupled to a number of local-area networks (LANs). The enterprise network is also coupled to metropolitan area networks (Optical MANs), which are in turn coupled to a large "backbone" wide area network (WAN). The optical MANs and WANs typically require a higher bandwidth than LANs in order to provide an adequate level of service demanded by their high-end users. However, as LAN speeds/bandwidth increase with improved technology, there is a need for increasing MAN/WAN speeds/bandwidth.

Recently, optical burst switching (OBS) scheme has emerged as a promising solution to support high-speed bursty data traffic over WDM optical networks. The OBS scheme offers a practical opportunity between the current optical circuit-switching and the emerging all optical packet switching technologies. It has been shown that under certain conditions, the OBS scheme achieves high-bandwidth utilization and class-of-service (CoS) by elimination of electronic bottlenecks as a result of the O-E-O conversion occurring at switching nodes, and by using one-way end-to-end bandwidth reservation scheme with variable time slot duration provisioning scheduled by the ingress nodes. Optical switching fabrics are attractive because they offer at least one or more orders of magnitude lower power consumption with a smaller form factor than comparable O-E-O switches. However, most of the recently published work on OBS networks focuses on the next-generation backbone data networks (i.e. Internet-wide network) using high capacity (i.e., 1 Tb/s) WDM switch fabrics with large number of input/output ports (i.e., 256x256), optical channels (i.e., 40 wavelengths), and requiring extensive buffering. Thus, these WDM switches tend to be complex, bulky, and very expensive to manufacture. In contrast, there is a growing demand to support a wide variety of bandwidth-demanding applications such as storage area networks (SANs) and multimedia multicast at a low cost for both LAN/WAN networks.

Rekhter, Y. et al "A Border Gateway Protocol 4 (BGP-4)" IEFT Request for Comments 1771, March 1995 discloses an inter-Autonomous System routing protocol with a primary function of exchanging network reachability information with other BGP systems. An Autonomous System is a set of routers using at least one interior Gateway protocol and common metrics to route packets within the Autonomous System and using an exterior gateway protocol to route packets to other Autonomous Systems. Network reachablility information is exchanged only with peers in neighboring Autonomous Systems to reflect a hop-by-hop routing paradigm generally used throughout the Internet, BGP-4 merely allowing aggregation of routes to allow hierarchical addressing as in a proposed "supernetting" address assignment and aggregation strategy.

According to a first aspect of the invention, there is provided a method for routing data across an enterprise network including a plurality of optical burst-switched networks, as claimed in claim 1.

According to a second aspect of the invention, there is provided a method of configuring a plurality of optical burst-switched networks to enable data communication between each other as claimed in claim 16.

According to a third aspect of the invention, there is provided an apparatus for use in an optical burst-switched network as claimed in claim 21.

According to a fourth aspect of the invention, there is provided a system comprising a plurality of optical burst-switched networks each comprising such an apparatus.

Further embodiments of the invention are included in the dependent claims.

### BRIEF DESCRIPTION OF THE DRAWINGS

The foregoing aspects and many of the attendant advantages of this invention will become more readily appreciated as the same becomes better understood by reference to the following detailed description, when taken in conjunction with the accompanying drawings, wherein like reference numerals refer to like parts throughout the various views unless otherwise specified:

Figure 1 is a simplified block diagram illustrating a photonic burst-switched (PBS) network with variable time slot provisioning, according to one embodiment of the present invention;

Figure 2 is a simplified flow diagram illustrating the operation of a photonic burst-switched (PBS) network, according to one embodiment of the present invention;

Figure 3 is a block diagram illustrating a switching node module for use in a photonic burst-switched (PBS) network, according to one embodiment of the present invention;

Figure 4a is a diagram illustrating the format of an optical data burst for use in a photonic burst-switched network, according to one embodiment of the present invention;

Figure 4b is a diagram illustrating the format of an optical control burst for use in a photonic burst-switched network, according to one embodiment of the present invention;

Figure 5 is a flow diagram illustrating the operation of a switching node module, according to one embodiment of the present invention;

Figure 6a is a schematic diagram of an exemplary enterprise network, which is segmented into a plurality of PBS networks and non-PBS networks that are linked to one another via potentially heterogeneous communication links to enable data transport across the entire enterprise network using an extension to an external gateway protocol, according to one embodiment of the invention;

Figure 6b shows the enterprise network of Figure 6a, now modeled as a plurality autonomous systems (ASs) that includes one or more Border Gateway Protocol (BGP) routers co-located at the edge nodes at each of the ASs, accordingly to one embodiment of the invention;

Figure 6c shows the enterprise network of Figure 6a and 6b, further showing four exemplary routes that may be employed to send data between source and destination resources hosted by different networks;

Figure 7 is a diagram illustrating the various fields in a BGP UPDATE message;

Figure 8a is a diagram illustrating the various fields corresponding to the path attributes of a conventional BGP UPDATE message;

Figure 8b is a diagram illustrating the additional fields that are added to the path attributes for the BGP UPDATE message of Figure 8a that enable external routing to be extended to optical burst-switched networks, according to one embodiment of the invention;

Figure 9 is a flowchart illustrating the operations used to configure and initialize an enterprise network including a plurality of PBS sub-networks, according to one embodiment of the invention;

Figure 10 is a flowchart illustrating the operations and logic performed for intra-enterprise network routing across multiple optical-switched and/or non-optical-switched networks, according to one embodiment of the invention; and

Figure 11 is a schematic diagram of a BGP router with co-located PBS label edge router node architecture, according to one embodiment of the invention.

### DETAILED DESCRIPTION OF PREFERRED EMBODIMENTS

Embodiments of techniques for routing data between optical switched networks using an extension to the Border Gateway Protocol (BGP) are described herein. In the following description, numerous specific details are set forth, such as descriptions of embodiments that are implemented for photonic burst-switched (PBS) networks, to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Reference throughout this specification to "one embodiment" or "an embodiment" means that a particular feature, structure, or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In the following detailed descriptions, embodiments of the invention are disclosed with reference to their use in a photonic burst-switched (PBS) network. A PBS network is a type of optical-switched network, typically comprising a high-speed hop and span-constrained network, such as an enterprise network. The term "photonic burst" is used herein to refer to statistically-multiplexed packets (*e*.*g*., Internet protocol (IP) packets, Ethernet frames, Fibre Channel frames) having similar routing requirements. Although conceptually similar to backbone-based OBS networks, the design, operating constraints, and performance requirements of these high-speed hop and span-constrained networks may be different. However, it will be understood that the teaching and principles disclosed herein may be applicable to other types of optical switched networks as well.

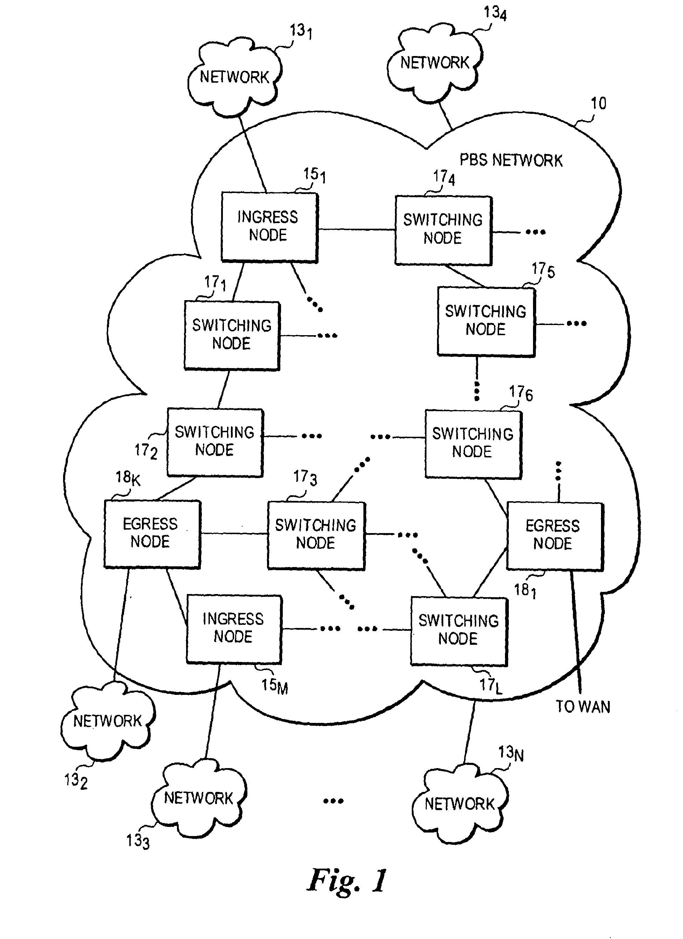

Figure 1 illustrates an exemplary photonic burst-switched (PBS) network 10 in which embodiments of the invention described herein may be implemented. A PBS network is a type of optical switched network. This embodiment of PBS network 10 includes local area networks (LANs) 13₁-13_{N} and a backbone optical WAN (not shown). In addition, this embodiment of PBS network 10 includes ingress nodes 15₁-15_{M}, switching nodes 17₁-I7_{L}, and egress nodes 18₁-18_{K}. PBS network 10 can include other ingress, egress and switching nodes (not shown) that are interconnected with the switching nodes shown in Figure 1. The ingress and egress nodes are also referred to herein as edge nodes in that they logically reside at the edge of the PBS network, and a single edge node may function as both an ingress and egress node. The edge nodes, in effect, provide an interface between the aforementioned "external" networks (*i*.*e*., external to the PBS network) and the switching nodes of the PBS network. In this embodiment, the ingress, egress and switching nodes are implemented with intelligent modules.

In some embodiments, the ingress nodes perform optical-electrical (O-E) conversion of received optical signals, and include electronic memory to buffer the received signals until they are sent to the appropriate LAN/WAN. In addition, in some embodiments, the ingress nodes also perform electrical-optical (E-O) conversion of the received electrical signals before they are transmitted to switching nodes 17₁-17_{M} of PBS network 10.

Egress nodes are implemented with optical switching units or modules that are configured to receive optical signals from other nodes of PBS network 10 and route them to the optical WAN or other external networks. Egress nodes can also receive optical signals from the optical WAN or other external network and send them to the appropriate node of PBS network 10, thus functioning as an ingress node. In one embodiment, egress node 18₁ performs O-E-O conversion of received optical signals, and includes electronic memory to buffer received signals until they are sent to the appropriate node of PBS network 10 (or to the optical WAN). Ingress and egress nodes may also receive a signal from and send signals out on network links implemented in the electrical domain (*e*.*g*., wired Ethernet links).

Switching nodes 17₁-17_{L} are implemented with optical switching units or modules that are each configured to receive optical signals from other switching nodes and appropriately route the received optical signals to other switching nodes of PBS network 10. As is described below, the switching nodes perform O-E-O conversion of optical control bursts and network management control burst signals. In some embodiments, these optical control bursts and network management control bursts are propagated only on preselected wavelengths. The preselected wavelengths do not propagate optical "data" bursts (as opposed to control bursts and network management control bursts) signals in such embodiments, even though the control bursts and network management control bursts may include necessary information for a particular group of optical data burst signals. The control and data information is transmitted on separate wavelengths in some embodiments (also referred to herein as out-of-band (OOB) signaling). In other embodiments, control and data information may be sent on the same wavelengths (also referred to herein as in-band (IB) signaling). In another embodiment, optical control bursts, network management control bursts, and optical data burst signals may be propagated on the same wavelength(s) using different encoding schemes such as different modulation formats, etc. In either approach, the optical control bursts and network management control bursts are sent asynchronously relative to its corresponding optical data burst signals. In still another embodiment, the optical control bursts and other control signals are propagated at different transmission rates from the optical data signals.

Although switching nodes 17₁-17_{L} may perform O-E-O conversion of the optical control signals, in this embodiment, the switching nodes do not perform O-E-O conversion of the optical data burst signals. Rather, switching nodes 17₁-17_{L} perform purely optical switching of the optical data burst signals. Thus, the switching nodes can include electronic circuitry to store and process the incoming optical control bursts and network management control bursts that were converted to an electronic form and use this information to configure photonic burst switch settings, and to properly route the optical data burst signals corresponding to the optical control bursts. The new control bursts, which replace the previous control bursts based on the new routing information, are converted to an optical control signal, and it is transmitted to the next switching or egress nodes. Embodiments of the switching nodes are described further below.

Elements of exemplary PBS network 10 are interconnected as follows. LANs 13₁-13_{N} are connected to corresponding ones of ingress nodes 15₁-15_{M}. Within PBS network 10, ingress nodes 15₁-15_{M} and egress nodes 18₁-18_{K} are connected to some of switching nodes 17₁-17_{L} via optical fibers. Switching nodes 17₁-17_{L} are also interconnected to each other via optical fibers in mesh architecture to form a relatively large number of lightpaths or optical links between the ingress nodes, and between ingress nodes 15₁-15_{L} and egress nodes 18₁-18_{K}. Ideally, there are multiple lightpaths to connect the switching nodes 17₁-17_{L} to each of the endpoints of PBS network 10 (*i*.*e*., the ingress nodes and egress nodes are endpoints within PBS network 10). Multiple lightpaths between switching nodes, ingress nodes, and egress nodes enable protection switching when one or more node fails, or can enable features such as primary and secondary route to destination.

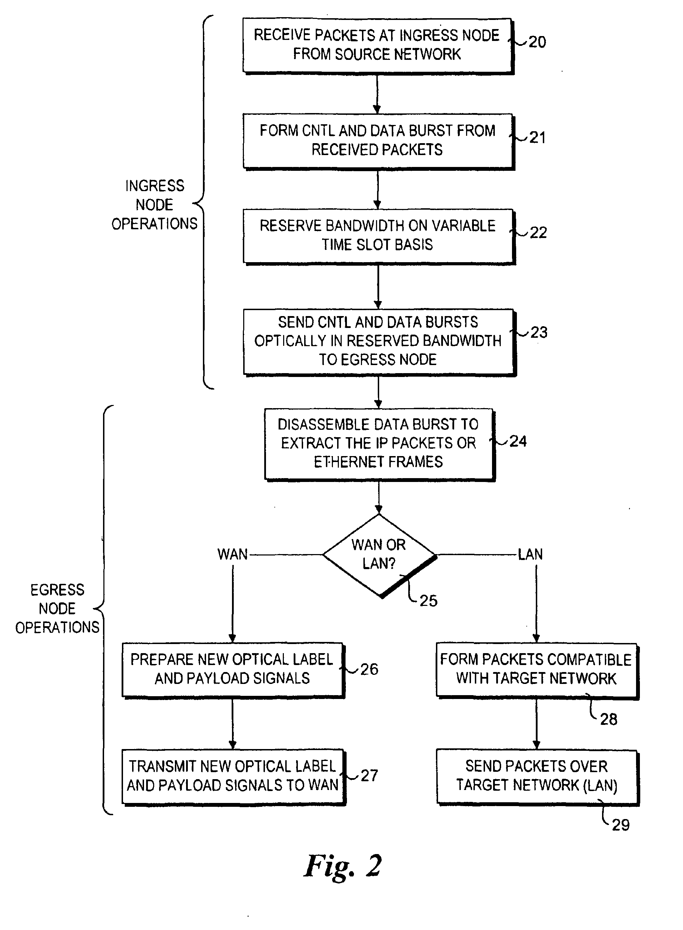

As described below in conjunction with Figure 2, the ingress, egress and switching nodes of PBS network 10 are configured to send and/or receive optical control bursts, optical data burst, and other control signals that are wavelength multiplexed so as to propagate the optical control bursts and control labels on pre-selected wavelength(s) and optical data burst or payloads on different preselected wavelength(s). Still further, the edge nodes of PBS network 10 can send optical control burst signals while sending data out of PBS network 10 (either optical or electrical).

Figure 2 illustrates the operational flow of PBS network 10, according to one embodiment of the present invention. Referring to Figures 1 and 2, photonic burst switching network 10 operates as follows.

The process begins in a block 20, wherein PBS network 10 receives IP packets or Ethernet frames from LANs 13₁-13_{N}. In one embodiment, PBS network 10 receives IP packets at ingress nodes 15₁-15_{M}. The received packets can be in electronic form rather than in optical form, or received in optical form and then converted to electronic form. In this embodiment, the ingress nodes store the received packets electronically.

For clarity, the rest of the description of the operational flow of PBS network 10 focuses on the transport of information from ingress node 15₁ to egress node 18_{1.} The transport of information from ingress nodes 15₂-15_{M} to egress node 18₁ (or other egress nodes) is substantially similar.

An optical burst label (*i*.*e*., an optical control burst) and optical payload (*i*.*e*., an optical data burst) is formed from the received IP packets, as depicted by a block 21. In one embodiment, ingress node 15₁ uses statistical multiplexing techniques to form the optical data burst from the received IP (Internet Protocol) packets stored in ingress node 15₁. For example, packets received by ingress node 15₁ and having to pass through egress node 18, on their paths to a destination can be assembled into an optical data burst payload.

Next, in a block 22, bandwidth on a specific optical channel and/or fiber is reserved to transport the optical data burst through PBS network 10. In one embodiment, ingress node 15₁ reserves a time slot (*i*.*e*, a time slot of a TDM system) in an optical data signal path through PBS network 10. This time slot maybe a fixed-time duration and/or variable-time duration with either uniform or non-uniform timing gaps between adjacent time slots. Further, in one embodiment, the bandwidth is reserved for a time period sufficient to transport the optical burst from the ingress node to the egress node. For example, in some embodiments, the ingress, egress, and switching nodes maintain an updated list of all used and available time slots. The time slots can be allocated and distributed over multiple wavelengths and optical fibers. Thus, a reserved time slot (also referred to herein as a TDM channel), which in different embodiments may be of fixed-duration or variable-duration, may be in one wavelength of one fiber, and/or can be spread across multiple wavelengths and multiple optical fibers.

When an ingress and/or egress node reserves bandwidth or when bandwidth is released after an optical data burst is transported, a network controller (not shown) updates the list. In one embodiment, the network controller and the ingress or egress nodes perform this updating process using various burst or packet scheduling algorithms based on the available network resources and traffic patterns. The available variable-duration TDM channels, which are periodically broadcasted to all the ingress, switching, and egress nodes, are transmitted on the same wavelength as the optical control bursts or on a different common preselected wavelength throughout the optical network. The network controller function can reside in one of the ingress or egress nodes, or can be distributed across two or more ingress and/or egress nodes.

The optical control bursts, network management control labels, and optical data bursts are then transported through photonic burst switching network 10 in the reserved time slot or TDM channel, as depicted by a block 23. In one embodiment, ingress node 15₁ transmits the control burst to the next node along the optical label-switched path (OLSP) determined by the network controller. In this embodiment, the network controller uses a constraint-based routing protocol [*e.g.*, multi-protocol label switching (MPLS)] over one or more wavelengths to determine the best available OLSP to the egress node.

In one embodiment, the control label (also referred to herein as a control burst) is transmitted asynchronously ahead of the photonic data burst and on a different wavelength and/or different fiber. The time offset between the control burst and the data burst allows each of the switching nodes to process the label and configure the photonic burst switches to appropriately switch before the arrival of the corresponding data burst. The term photonic burst switch is used herein to refer to fast optical switches that do not use O-E-O conversion.

In one embodiment, ingress node 15₁ then asynchronously transmits the optical data bursts to the switching nodes where the optical data bursts experience little or no time delay and no O-E-O conversion within each of the switching nodes. The optical control burst is always sent before the corresponding optical data burst is transmitted.

In some embodiments, the switching node may perform O-E-O conversion of the control bursts so that the node can extract and process the routing information contained in the label. Further, in some embodiments, the TDM channel is propagated in the same wavelengths that are used for propagating labels. Alternatively, the labels and payloads can be modulated on the same wavelength in the same optical fiber using different modulation formats. For example, optical labels can be transmitted using non-return-to-zero (NRZ) modulation format, while optical payloads are transmitted using return-to-zero (RZ) modulation format on the same wavelength. The optical burst is transmitted from one switching node to another switching node in a similar manner until the optical control and data bursts are terminated at egress node 18₁.

The remaining set of operations pertains to egress node operations. Upon receiving the data burst, the egress node disassembles it to extract the IP packets or Ethernet frames in a block 24. In one embodiment, egress node 18₁ converts the optical data burst to electronic signals that egress node 18₁ can process to recover the data segment of each of the packets. The operational flow at this point depends on whether the target network is an optical WAN or a LAN, as depicted by a decision block 25.

If the target network is an optical WAN, new optical label and payload signals are formed in a block 26. In this embodiment, egress node 18₁ prepares the new optical label and payload signals. The new optical label and payload are then transmitted to the target network (*i*.*e*., WAN in this case) in a block 27. In this embodiment, egress node 18₁ includes an optical interface to transmit the optical label and payload to the optical WAN.

However, if in block 25 the target network is determined to be a LAN, the logic proceeds to a block 28. Accordingly, the extracted IP data packets or Ethernet frames are processed, combined with the corresponding IP labels, and then routed to the target network (i.e., LAN in this case). In this embodiment, egress node 18₁ forms these new IP packets. The new IP packets are then transmitted to the target network (*i.e.*, LAN) as shown in block 29.

PBS network 10 can achieve increased bandwidth efficiency through the additional flexibility afforded by the TDM channels. Although this exemplary embodiment described above includes an optical MAN having ingress, switching and egress nodes to couple multiple LANs to an optical WAN backbone, in other embodiments the networks do not have to be LANs, optical MANs or WAN backbones. That is, PBS network 10 may include a number of relatively small networks that are coupled to a relatively larger network that in turn is coupled to a backbone network.

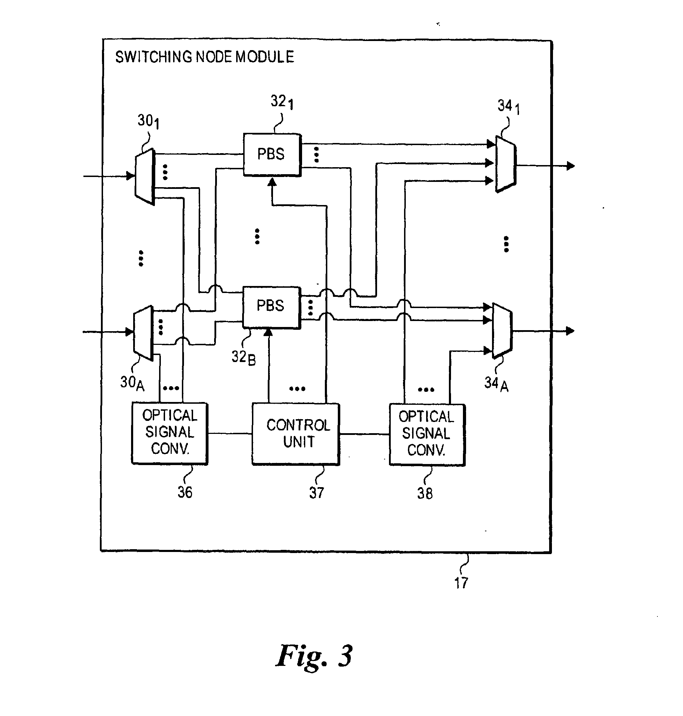

Figure 3 illustrates a module 17 for use as a switching node in photonic burst switching network 10 (Figure 1), according to one embodiment of the present invention. In this embodiment, module 17 includes a set of optical wavelength division demultiplexers 30₁-30_{A}, where *A* represents the number of input optical fibers used for propagating payloads, labels, and other network resources to the module. For example, in this embodiment, each input fiber could carry a set of *C* wavelengths (*i.e.*, WDM wavelengths), although in other embodiments the input optical fibers may carry differing numbers of wavelengths. Module 17 would also include a set of *N* x *N* photonic burst switches 32₁-32_{B}, where *N* is the number of input/output ports of each photonic burst switch. Thus, in this embodiment, the maximum number of wavelengths at each photonic burst switch is *A*· *C*, where *N*≥*A· C*+1. For embodiments in which *N* is greater than *A· C*, the extra input/output ports can be used to loop back an optical signal for buffering.

Further, although photonic burst switches 32₁-32_{B} are shown as separate units, they can be implemented as *N* x *N* photonic burst switches using any suitable switch architecture. Module 17 also includes a set of optical wavelength division multiplexers 34₁-34_{A}, a set of optical-to-electrical signal converters 36 (*e.g.*, photo-detectors), a control unit 37, and a set of electrical-to-optical signal converters 38 (*e.g.*, lasers). Control unit 37 may have one or more processors to execute software or firmware programs. Further details of control unit 37 are described below.

The elements of this embodiment of module 17 are interconnected as follows. Optical demultiplexers 30₁-30_{A} are connected to a set of A input optical fibers that propagate input optical signals from other switching nodes of photonic burst switching network 10 (Figure 1). The output leads of the optical demultiplexers are connected to the set of *B* core optical switches 32₁-32₈ and to optical signal converter 36. For example, optical demultiplexer 30₁ has *B* output leads connected to input leads of the photonic burst switches 32₁-32_{B} (*i*.*e*., one output lead of optical demultiplexer 30₁ to one input lead of each photonic burst switch) and at least one output lead connected to optical signal converter 36.

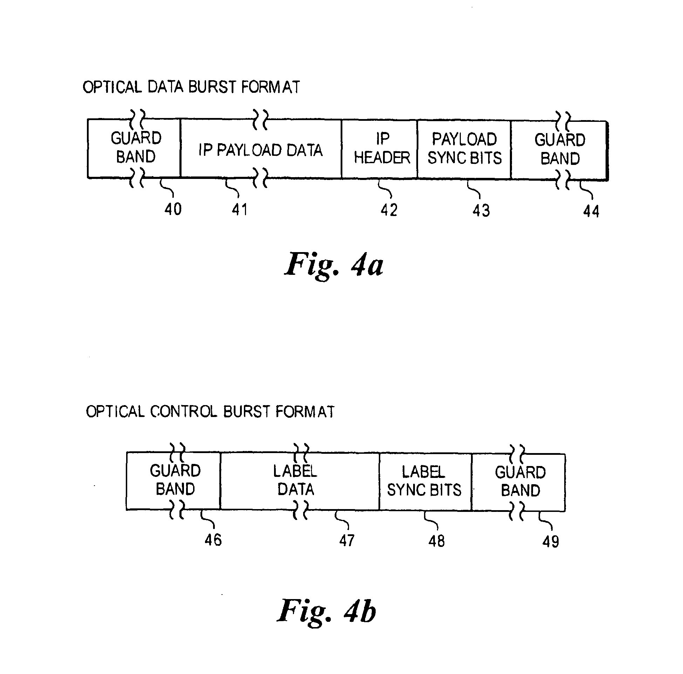

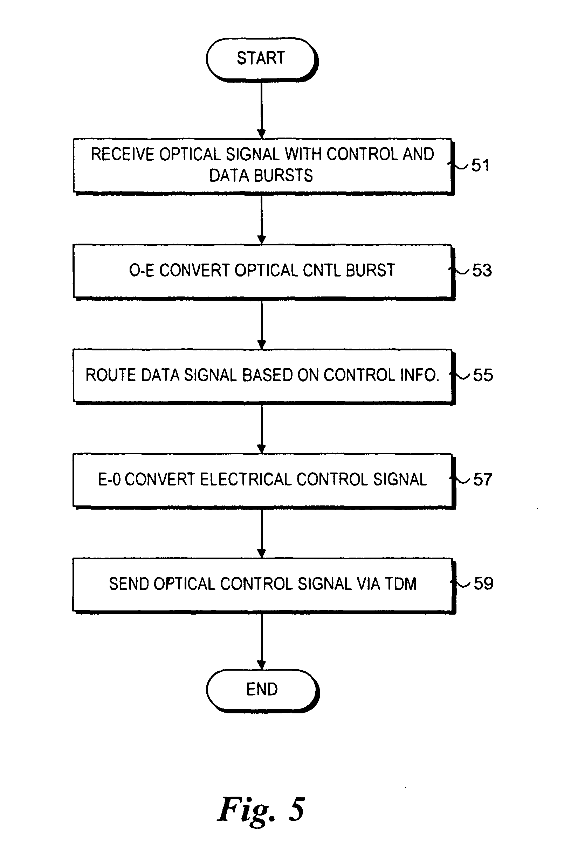

The output leads of photonic burst switches 32₁-32_{B} are connected to optical multiplexers 34₁-34_{A}. For example, photonic burst switch 32₁ has *A* output leads connected to input leads of optical multiplexers 34₁-34_{A} (*i.e.*, one output lead of photonic burst switch 32₁ to one input lead of each optical multiplexer). Each optical multiplexer also an input lead connected to an output lead of electrical-to-optical signal converter 38. Control unit 37 has an input lead or port connected to the output lead or port of optical-to-electrical signal converter 36. The output leads of control unit 37 are connected to the control leads of photonic burst switches 32₁-32₈ and electrical-to-optical signal converter 38. As described below in conjunction with the flow diagram of Figure 5, module 17 is used to receive and transmit optical control bursts, optical data bursts, and network management control bursts. In one embodiment, the optical data bursts and optical control bursts have transmission formats as shown in Figures 4A and 4B.

Figure 4A illustrates the format of an optical data burst for use in PBS network 10 (Figure 1), according to one embodiment of the present invention. In this embodiment, each optical data burst has a start guard band 40, an IP payload data segment 41, an IP header segment 42, a payload sync segment 43 (typically a small number of bits), and an end guard band 44 as shown in Figure 4A. In some embodiments, IP payload data segment 41 includes the statistically-multiplexed IP data packets or Ethernet frames used to form the burst. Although Figure 4A shows the payload as contiguous, module 17 transmits payloads in a TDM format. Further, in some embodiments the data burst can be segmented over multiple TDM channels. It should be pointed out that in this embodiment the optical data bursts and optical control bursts have local significance only in PBS network 10, and may loose their significance at the optical WAN.

Figure 4B illustrates the format of an optical control burst for use in photonic burst switching network 10 (Figure 1), according to one embodiment of the present invention. In this embodiment, each optical control burst has a start guard band 46, an IP label data segment 47, a label sync segment 48 (typically a small number of bits), and an end guard band 49 as shown in Figure 4B. In this embodiment, label data segment 47 contains all the necessary routing and timing information of the IP packets to form the optical burst Although Figure 4B shows the payload as contiguous, in this embodiment module 17 transmits labels in a TDM format.

In some embodiments, an optical network management control label (not shown) is also used in PBS network 10 (Figure 1). In such embodiments, each optical network management control burst includes: a start guard band similar to start guard band 46; a network management data segment similar to data segment 47; a network management sync segment (typically a small number of bits) similar to label sync segment 48; and an end guard band similar to end guard band 44. In this embodiment, network management data segment contains network management information needed to coordinate transmissions over the network. In some embodiments, the optical network management control burst is transmitted in a TDM format.

Figure 5 illustrates the operational flow of module 17 (Figure 3), according to one embodiment of the present invention. Referring to Figures 3 and 5, module 17 operates as follows.

Module 17 receives an optical signal with TDM label and data signals. In this embodiment, module 17 receives an optical control signal (*e.g.*, an optical control burst) and an optical data signal (*i*.*e*., an optical data burst in this embodiment) at one or two of the optical demultiplexers. For example, the optical control signal may be modulated on a first wavelength of an optical signal received by optical demultiplexer 30_{A}, while the optical data signal is modulated on a second wavelength of the optical signal received by optical demultiplexer 30_{A}. In some embodiments, the optical control signal may be received by a first optical demultiplexer while the optical data signal is received by a second optical demultiplexer. Further, in some cases, only an optical control signal (*e.g.*, a network management control burst) is received. A block 51 represents this operation.

Module 17 converts the optical control signal into an electrical signal. In this embodiment, the optical control signal is the optical control burst signal, which is separated from the received optical data signal by the optical demultiplexer and sent to optical-to-electrical signal converter 36. In other embodiments, the optical control signal can be a network management control burst (previously described in conjunction with Figure 4B). Optical-to-electrical signal converter 36 converts the optical control signal into an electrical signal. For example, in one embodiment each portion of the TDM control signal is converted to an electrical signal. The electrical control signals received by control unit 37 are processed to form a new control signal. In this embodiment, control unit 37 stores and processes the information contained in the control signals. A block 53 represents this operation.

Module 17 then routes the optical data signals (*i*.*e*., optical data burst in this embodiment) to one of optical multiplexers 34₁-34_{A}, based on routing information contained in the control signal. In this embodiment, control unit 37 processes the control burst to extract the routing and timing information and sends appropriate PBS configuration signals to the set of *B* photonic burst switches 32₁-32_{B} to re-configure each of the photonic burst switches to switch the corresponding optical data bursts. A block 55 represents this operation.

Module 17 then converts the processed electrical control signal to a new optical control burst. In this embodiment, control unit 37 provides TDM channel alignment so that reconverted or new optical control bursts are generated in the desired wavelength and TDM time slot pattern. The new control burst may be modulated on a wavelength and/or time slot different from the wavelength and/or time slot of the control burst received in block 51. A block 57 represents this operation.

Module 17 then sends the optical control burst to the next switching node in the route. In this embodiment, electrical-to-optical signal generator 38 sends the new optical control burst to appropriate optical multiplexer of optical multiplexers 34₁-34_{A} to achieve the route. A block 59 represents this operation.

While individual PBS networks are very advantageous for transmission of data at very high data rates, they typically are span limited. For instance, a PBS network is generally hop-constrained due to the limited optical power budget for lower-cost network implementation using, for example, modified 10 GbE network interfaces. Although the maximum size of PBS networks is still under investigation, preliminary analysis indicates that a typical PBS network has about 5-15 switching nodes with about 3-4 hops along a given optical label-switched path (OLSP). However, this is not meant to be limiting, as the particular configuration and size of a PBS network may differ based on various considerations, including in response to technical advancements.

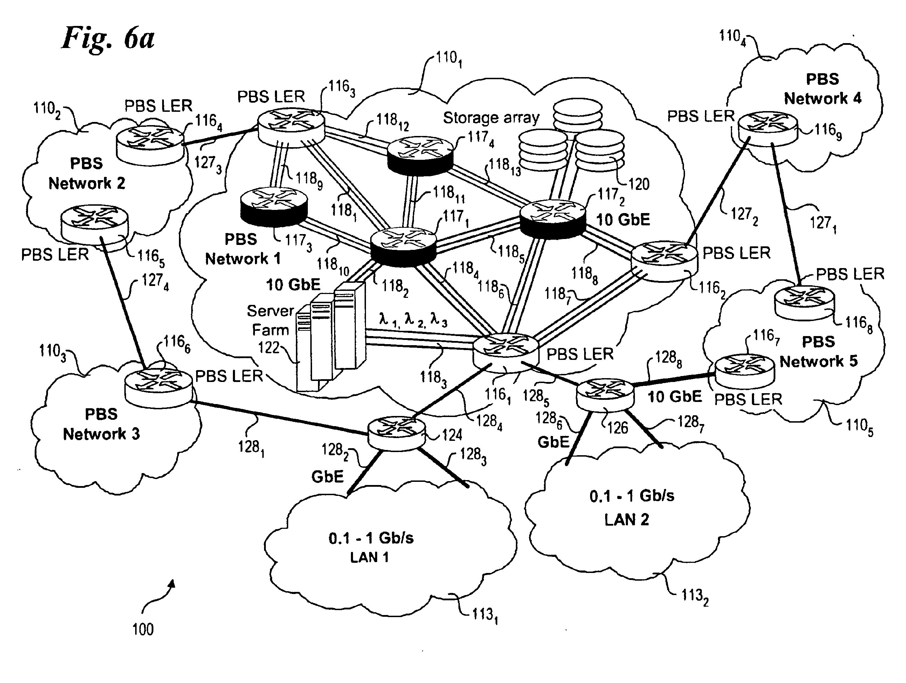

In accordance with aspects of the invention, an external routing scheme is disclosed herein to enable PBS network to PBS network routing. Under the scheme, an enterprise network can be segmented into inter-connected sub-networks or "islands" of PBS networks with peer-to-peer signaling, where network performance is balanced between implementation costs and complexity. Figure 6a shows, for example, an enterprise network 100 including five interconnected PBS networks 110₁, 110₂, 110₃, 110₄, and 110_{5,} each depicted as a separate island. In addition to the PBS islands, a typical PBS-based enterprise network may include conventional sub-nets, such as illustrated by local area networks (LANs) 113₁ and 113₂. Internally, each PBS island (*i.e.*, subnet) comprises a plurality of edge nodes 116₁₋₉ and switching nodes 117 ₁₋₂ and 117 ₄₋₅ linked by internal optical fiber links 118₁₋₁₃, in a manner similar to PBS network 10 of Figure 1. For illustrative purposes, optical fiber links 118₁₋₈ are shown as three lines representing the capacity to concurrently transmit data over three different wavelengths via a single fiber or a single wavelength over three different fibers. It will be understood that a single fiber link may support 1-*N* concurrent wavelengths under an appropriate WDM implementation. Furthermore, more than one fiber link may be employed to connect a pair of nodes, thereby providing a redundancy in case of link failure or to support increased traffic. Also for simplicity and clarity, only edge nodes 116₄, 116_{5,} 116₆, 116₇, 116₈, and 116₉ are shown for PBS networks 110₂, 110_{3,} 110_{4,} and 110₅. It will be understood, that the internal configuration of each of these PBS networks maybe similar to that illustrated for PBS network 110₁.

In addition to PBS-based nodes, a PBS network may include network-accessible resources such as storage, database, and application servers. For example, PBS network 110₁ illustrates, for example, a SAN (storage area network), which includes a storage array 120 illustrative, PBS switching nodes 117₁₋₄ and a server farm 122 containing, typically, a plurality of rack-mounted servers. PBS nodes will generally be linked to these and similar network-accessible resources via optical links. However, this is not limiting, as conventional wired links may also be employed. In either case, the PBS network nodes that are linked to the network resources shall have the capacity to perform any O-E, O-E-O, and E-O conversions necessary to support communication protocols supported by the network-accessible resource.

The various PBS networks 110₁₋₅ are interconnected with each other via communication links 127₁₋₄ coupled between respective sets of edge nodes 116. For example, PBS network 110₄ is connected to PBS network110₅ via a communication link 127₁ between edge node 116₉ and edge node 116₈. Generally, communications links 127₁₋₄ will comprise optical links, although wired (non-optical) links may also be implemented as well.

PBS networks 110 may generally be connected to conventional external sub-nets, such as LANS, via one or more conventional routing devices and corresponding communication links. For example, PBS networks 110₁, 110₃ and 110₅ are connected to LANs 113₁ and 113₂ via external conventional routers 124 and 126 and corresponding communication links 128₁₋₈. Again, optical links will usually be employed between the external subnets and the external routers, although wired non-optical links may also be implemented. In general, PBS networks may be interconnected directly to one another, or one or more conventional intermediate routers may reside between PBS networks.

One advantage of a PBS-to-PBS network routing in an enterprise network 100 is that the "reach" of the network may be extended beyond that available to an individual PBS network. However, this is accomplished at the cost of routing complexity. As can be readily recognized, routing data between peripheral PBS networks, such as between PBS network 110₂ and PBS network 110₅, requires data to pass through multiple switching devices, including PBS edge nodes, PBS switching nodes, and external conventional routers. In order to provide efficient routing, that is, routing that attempts to maximize bandwidth utilization and throughput while minimizing end-to-end network latency, there needs to be sufficient routing knowledge at appropriate routing devices. In general, the routing information that would need to be maintained, such as routing tables, goes up exponentially relative to the number of routing devices. When considering a more complex enterprise network involving 10 or more PBS networks, the routing information problem quickly becomes intractable.

In accordance with an aspect of the invention, the routing complexity is greatly reduced by abstracting the internal PBS switching configuration from external routing devices. Each PBS network forms an optical domain and behaves like an autonomous system (AS), wherein routing within a given PBS network is facilitated through use of an appropriate internal routing mechanism, such as one of several well-known internal routing protocols. For example, an internal gateway protocol (IGP) such as a modified open shortest path first (OSPF) may be employed for intra-domain routing. Meanwhile, PBS-to-PBS network routing is enabled by modifying an external gateway protocol (EGP), which is used to determine the best available route to a particular PBS network when multiple lightpaths are available. The route selection process by the EGP is done via the associated attributes of the specific PBS network. Thus, each lightpath between different PBS networks is mapped to a given route or a switched connection, enabling a host on a given PBS network to access resources on other PBS networks in an efficient manner.

In one respect, the routing scheme is similar to that employed for Internet routing, wherein each network domain operates as an autonomous system (AS), and external routing is employed to route data to and through the various AS's by employing an inter-domain routing protocol that is only aware of interconnections between distinct domains, while being unaware of any information about the routing within each domain. In particular, the routing domain used for the Internet is known as the Border Gateway Protocol (BGP), and embodiments of the invention implement an extended version of the BGP protocol that includes provisions for facilitating PBS-to-PBS network routing.

In one embodiment, one or more of the edge nodes of each PBS network are designated as the "External Gateway Protocol" router(s), which run a modified BGP protocol on their interface connections to other neighboring PBS networks and/or non-PBS networks. Thus, all the outgoing and incoming data traffic to a specific PBS network is transmitted through the PBS BGP router located at the edge node. In one embodiment, each external gateway protocol router advertises selectively all of its possible routes to some or all of the neighboring BGP routers. This allows each PBS gateway to control and optimize the data traffic entering and leaving its network based on business needs. In another embodiment, each AS (i.e., PBS network) is allowed to rank or prioritize the various route advertisements it sends based on the associated attributes as well as other criteria such as bandwidth utilization or end-to-end latency. Thus, a PBS gateway can easily influence the BGP decision process in the selection of the best route among all the available routes. Advertising the availability of lightpath routes across PBS networks is done using the BGP UPDATE message. The PBS-to-PBS network connectivity is not limited to an all-optical network, but can also include other types of optical physical links such as SONET/SDH or 10 Gb/s Ethernet.

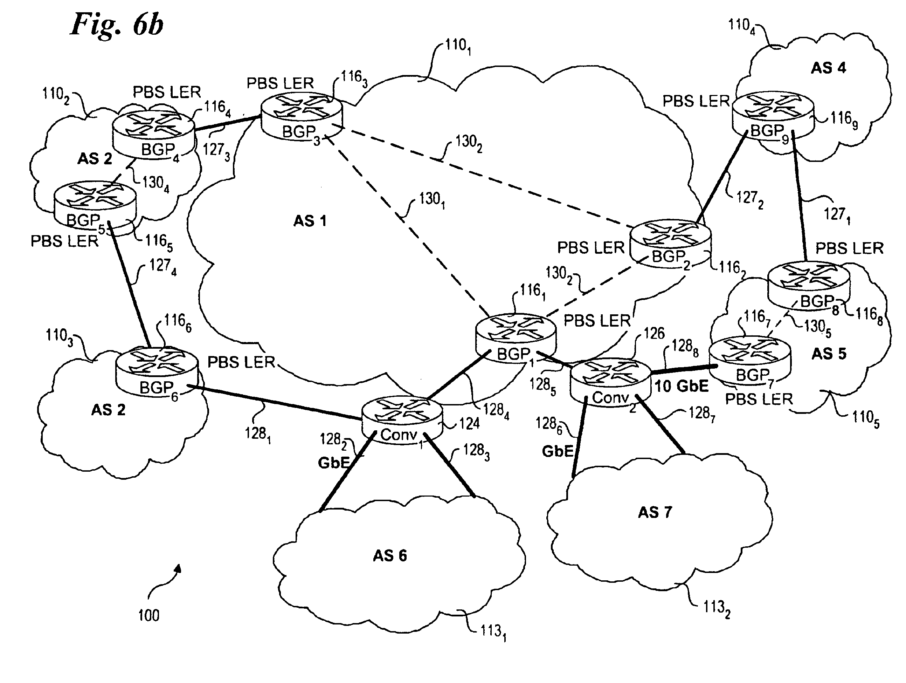

Figure 6b shows enterprise network 110 as it appears from the perspective of the BGP routers, which include all of the routers shown with a "BGP*ₙ*" label. In particular, each of the edge nodes 116₁₋₉ functions as a BGP router, while PBS networks 110₁, 110₂, 110₃, 110₄, and 110₅ are considered autonomous systems AS 1, AS 2, AS 3, AS 4, and AS 5, respectively. Meanwhile, all of the internal switching nodes within a given AS (*i*.*e*., PBS network) are invisible to all of the BGP routers outside of that AS. For example, internal switching nodes 117₁ and 117₂ are only visible to the BGP routers in AS 1 (*i*.*e*., PBS edge nodes 116₁, 116₂, and 116₃), while being invisible to all of the BGP boarder routers outside of AS 1.

As discussed above, after the control burst is sent hop-to-hop from the ingress node to egress node for end-to-end one-way bandwidth reservation with variable time provisioning, the data burst is transmitted (after some offset time) to the egress node along the same lightpath as the control burst. However, the data burst is transparently transmitted through the switching nodes without its content being examined. The PBS switch fabric provides a connection between input and output ports within dynamically reserved time duration, thus allowing the data bursts to be transmitted through, wherein the reserved lightpath constitutes a "virtual optical circuit" coupling the ingress and egress nodes. From the perspective of the PBS edge node BGP routers, the virtual optical circuits appear as direct connections between the edge nodes, as depicted by virtual links 130₁₋₅.

From a routing standpoint, the BGP routing for enterprise network 100 is roughly analogous to BGP routing on the Internet, with acknowledgement that the number of AS's that form the Internet are far more than the number that will be employed in a typical enterprise network. However, the routing principles are similar. As such, much of the routing implementation will be similar to that encountered for conventional BGP routing, using well-known setup and configuration methods.

BGP is the current de facto standard inter-domain routing protocol. BGP first became in Internet standard in 1989 and was originally defined in RFC (request for comment) 1105. It was then adopted as the EGP of choice for inter-domain routing. The current version, BGP-4, was adopted in 1995 and is defined in RFC 1771.

BGP is a *path-vector protocol* that works by sending *route advertisements*. Routing information is stored at each BGP router as a combination of destination and attributes of the path to that destination. A route advertisement indicates that reachability of a network (*i*.*e*., a network address and a netmask representing block of contiguous IP address. Besides the reachable network and the IP address of the router that is used to reach this network (known as the *next hop),* a route advertisement also contains the AS path attribute, which contains the list of all the transit AS's that may be used to reach the announced network. The length of the AS path may be considered as the route metric. A route advertisement may also contain several optional attributes, such as the *local_pref, multi-exit discriminator* (MED), or *communities* attributes.

The BGP UPDATE message is used to provide routing updates when a change happens within a network. In order to set-up lightpath among different PBS "islands" or networks, the standard BGP needs to be extended to convey the necessary lightpath routing information to the BGP routers. The goal is to leverage the existing BGP properties, but extend them to meet the routing requirements of PBS networks.

A PBS LER (label edge router) is designated as the primary PBS BGP router to support routing among the different optical domains. As shown in Figure 6b, BGP routers BGP₁₋₉ are PBS LER candidates, while external (*i*.*e*., non-PBS node) conventional routers 124 (Conv₁) and 126 (Conv₂) are not. However, in instances in which conventional external routers such as 124 and 126 are to forward data using the BGP-based external routing scheme disclosed herein, these external routers will be enabled to process and forward BGP messages. The PBS BGP router will be responsible to set-up lightpaths by advertising the lightpath attributes to its neighboring BGP routers, and build-up and maintain routing information base (RIB) for all the possible routes. In general, PBS BGP routers and PBS LERs may be co-located at the same network node.

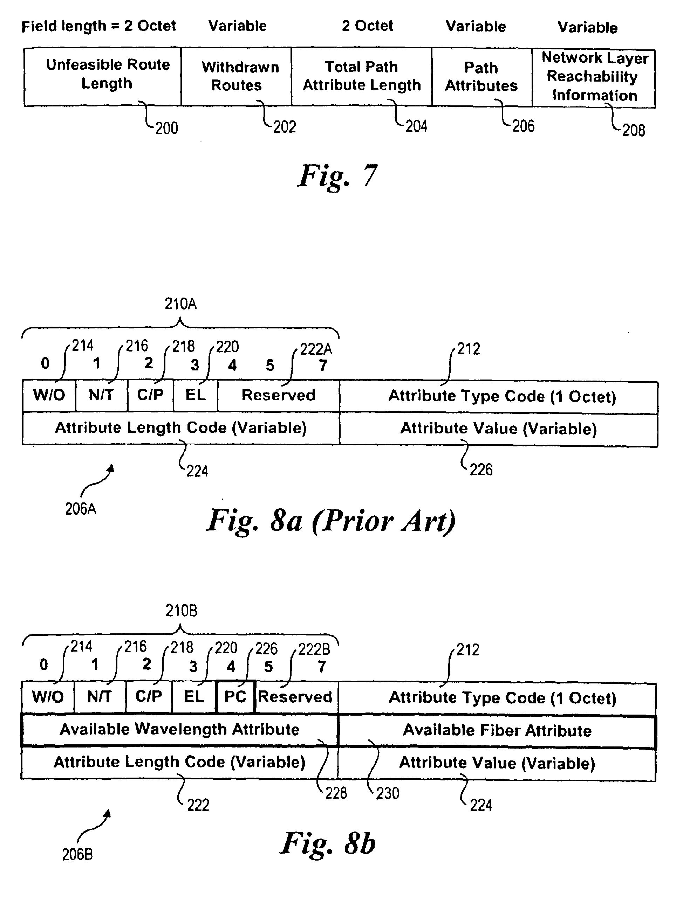

Figure 7 shows the format of the UPDATE message with its corresponding fields. The update message includes an Unfeasible Route Length field 200, a Withdrawn Routes field 202, a Path Attribute Length field 204, a Path Attributes field 206, and a Network Layer Reachability Information (NLRI) field 208. Routes are advertised between a pair of BGP speakers (*i.e.*, BGP routers that are connected to one another via a single hop) in UPDATE messages: the destination is the systems whose IP addresses are reported in NLRI field 208, and the path is the information reported in the path attributes field 206 of the same UPDATE message.

The Unfeasible Route Length field 200 comprises a 2-octet unsigned integer that indicates the total length of the Withdrawn Routes field in octets. Its value must allow the length of the Network Layer Reachability Information field 208 to be determined as specified below. A value of 0 indicates that no routes are being withdrawn from service, and that the Withdrawn Routes field is not present in this UPDATE message.

The Withdrawn Routes field 202 is a variable length field that contains a list of IP address prefixes for the routes that are being withdrawn from service. Each IP address prefix is encoded as a 2-tuple which includes a single octet length field followed by a variable-length prefix field. The Length field indicates the length in bits of the IP address prefix. A length of zero indicates a prefix that matches all IP addresses (with prefix, itself, of zero octets). The Prefix field contains IP address prefixes followed by enough trailing bits to make the end of the field fall on an octet boundary.

The Total Path Attribute Length field 204 comprises a 2-octet unsigned integer that indicates the total length of the Path Attributes field 206 in octets. A value of 0 indicates that no Network Layer Reachability Information field is present in this UPDATE message.

Details of a conventional Path Attributes field 206 is shown at 206A in Figure 8a. A variable length sequence of path attributes is present in every UPDATE. Each path attribute is a triple of variable length. Attribute Type is a two-octet field that consists of the Attribute Flags octet 210A followed by an Attribute Type Code octet 212. The high-order bit (bit 0) of the Attribute Flags octet is the Optional bit 214. It defines whether the attribute is optional (if set to 1) or well-known (if set to 0).

The second high-order bit (bit 1) of the Attribute Flags octet is the Transitive bit 216. It defines whether an optional attribute is transitive (if set to 1) or non-transitive (if set to 0). For well-known attributes, the Transitive bit must be set to 1.

The third high-order bit (bit 2) of the Attribute Flags octet is the Partial bit 218. It defines whether the information contained in the optional transitive attribute is partial (if set to 1) or complete (if set to 0). For well-known attributes and for optional non-transitive attributes the Partial bit must be set to 0.

The fourth high-order bit (bit 3) of the Attribute Flags octet is the Extended Length bit 220. It defines whether the Attribute Length is one octet (if set to 0) or two octets (if set to 1). Extended Length bit 220 may be used only if the length of the attribute value is greater than 255 octets.

The lower-order four bits of the Attribute Flags octet are unused, as depicted by reserved field 222. They must be zero (and must be ignored when received).

The Attribute Type Code octet 212 contains the Attribute Type Code. Currently defined Attribute Type Codes are discussed in Section 5 of RFC 1771.

If the Extended Length bit 220 of the Attribute Flags octet 210 is set to 0, the third octet of the Path Attribute contains the length of the attribute data in octets. If the Extended Length bit of the Attribute Flags octet is set to 1, then the third and the fourth octets of the path attribute contain the length of the attribute data in octets. Attribute length code 224 depicts both of these cases. The remaining octets of the Path Attribute represent the attribute value 226 and are interpreted according to the Attribute Flags 210 and the Attribute Type Code 212. The supported Attribute Type Codes, their attribute values and uses are the following:

### a) ORIGIN (Type Code 1):

ORIGIN is a well-known mandatory attribute that defines the origin of the path information. The data octet can assume the following values shown in TABLE 1 below.

**TABLE 1**

| Value | Meaning |
|---|---|
| 0 | IGP - Network Layer Reachability Information is interior to the originating AS |
| 1 | EGP - Network Layer Reachability Information learned via EGP |
| 2 | INCOMPLETE - Network Layer Reachability Information learned by some other means |

### b) AS_PATH (Type Code 2):

AS_PATH is a well-known mandatory attribute that is composed of a sequence of AS path segments. Each AS path segment is represented by a triple. The path segment type is a 1-octet long field with the following values defined in TABLE 2 below. The path segment length is a 1-octet long field containing the number of ASs in the path segment value field. The path segment value field contains one or more AS numbers, each encoded as a 2-octets long field.

**TABLE 2**

| Value | Segment Type |
|---|---|
| 1 | AS_SET: an unordered set of ASs numbers used to aggregate routes with different AS paths in the UPDATE message has traversed |
| 2 | AS_SEQUENCE: an ordered set of ASs routes from last advertised to origin AS in the UPDATE message has traversed |

### c) NEXT_HOP (Type Code 3):

This is a well-known mandatory attribute (RFC 1771) that defines the IP address of the router that should be used as the BGP next hop to the destinations listed in the Network Layer Reachability field of the UPDATE message. The router makes a recursive lookup to fmd the BGP next hop in the routing table.

### d) MULTI_EXIT_DISC (Type Code 4):

MULTI_EXIT_DISCriminator (MULTI_EXIT_DISC) is an optional non-transitive attribute that is a four octet non-negative integer. The values of this attribute may be used by a BGP speaker's decision process to discriminate among multiple exit points to a neighboring autonomous system. The MULTI_EXIT_DISC (MED) values are locally significant to an AS and are set according to the local policy.

### LOCAL_PREF (Type Code 5):

LOCAL_PREFerence (LOCAL_PREF) is a well-known discretionary attribute that is a four octet non-negative integer. It is used by the BGP speaker to inform other BGP speakers in its own autonomous system of the originating speaker's degree of preference for an advertised route. (In other word, this attribute, which has only local significance, is used to communicate with other BGPs within a single AS to identify the preferred path out of the AS).

### f) ATOMIC_AGGREGATE (Type Code 6)

ATOMIC_AGGREGATE is a well-known discretionary attribute of length 0. It is used by a BGP speaker to inform other BGP speakers that the local system selected a less specific route without selecting a more specific route which is included in it.

### g) AGGREGATOR (Type Code 7)

AGGREGATOR is an optional transitive attribute of length 6 octets. The attribute contains the last AS number that formed the aggregate route (encoded as 2 octets), followed by the IP address of the BGP speaker that formed the aggregate route (encoded as 4 octets).

Optionally, the BGP attributes may further include the COMMUNITIES attribute, as defined in RFC 1997, and the EXTENDED COMMUNITIES attribute, as defined in IETF (Internet Engineering Task Force) draft RFC draft-ietf-idr-bgp-ext-communities

### h) COMMUNITIES (Type Code 8)

A community is a group of destinations that share some common property. Each autonomous system administrator may define which communities a destination belongs to.

### i) EXTENDED COMMUNITIES (Type Code 16)

The BGP Extended Communities Attribute is similar to BGP Communities Attribute. It is an optional transitive attribute. The BGP Extended Communities Attribute can carry multiple Extended Community values. Each Extended Community value is eight octets in length. Several types of extended communities have been defined such as:
(A) Route Target Community (extended type 0x02): It identifies a target for a prefix across AS boundaries.
(B) Route Origin Community (extended type 0x03): It identifies the origin of a prefix, transitive across AS boundaries.
(C) Link Bandwidth Community (extended type 0x04): It defines a metric for the link bandwidth between IGP and EGP peers, transitive across AS boundaries.

In accordance with aspects of the invention, Figure 8b shows details of a set of modified Path Attributes 206B containing additional information (shown in the boxes with the bolded lines) for specifying optical transmission attributes to extend the BGP protocol to optical-switched networks, according to one embodiment. These extensions include a PBS connection (PC) field 226, an Available Wavelength Attribute field 228, and an Available Fiber Attribute field 230. PC field 226 corresponds to bit 4 of an Attribute Flags octet 210B. A value of 0 indicates that a PBS connection is unavailable. A value of 1 indicates a PBS connection is available.

The value in the Available Wavelength Attribute field 228 indicates the status of the current wavelength availability between neighboring PBS networks (optical domains). If the value is 0, no wavelengths are available for the requested lightpath. Any included value corresponds to one or more wavelengths that are available for the requested lightpath. This means that the BGP router that is co-located with a PBS LER can start a lightpath set-up process to a specific destination.

The value in Available Fiber Attribute field 230 indicates the status of the current fiber availability between neighboring PBS networks. A value of 0 indicates the fiber is not available for the requested lightpath. This means that either the fiber is used by other wavelengths or the fiber link is down. In either case, a backup route must be selected. A non-zero value indicates the fiber is available for use by the requested lightpath to the destination address.

Returning to Figure 7, Network Layer Reachability Information field 208 comprises a variable length field containing a list of IP address prefixes.
The length in octets of the Network Layer Reachability Information is not encoded explicitly, but can be calculated as:

UPDATE message Length - 23 - Total Path Attributes Length - Unfeasible Routes Length where UPDATE message Length is the value encoded in the fixed-size BGP header, Total Path Attribute Length and Unfeasible Routes Length are the values encoded in the variable part of the UPDATE message, and 23 is a combined length of the fixed-size BGP header, the Total Path Attribute Length field and the Unfeasible Routes Length field.

Reachability information is encoded as one or more 2-tuples of the form, Length (1 octet), Prefix (variable length). The Length field indicates the length in bits of the IP address prefix. A length of zero indicates a prefix that matches all IP addresses (with prefix, itself, of zero octets). The Prefix field contains IP address prefixes followed by enough trailing bits to make the end of the field fall on an octet boundary, wherein the value of the trailing bits is irrelevant.

UPDATE messages in BGP are the most relevant to the design and operation of the PBS BGP since they convey the new route availability information from router to router. For example, the network topology (from a BPG router standpoint) can be expressed through advertisements that are made to neighboring BPG routers via corresponding UPDATE messages. These principles are well-known to those skilled in the network routing arts.

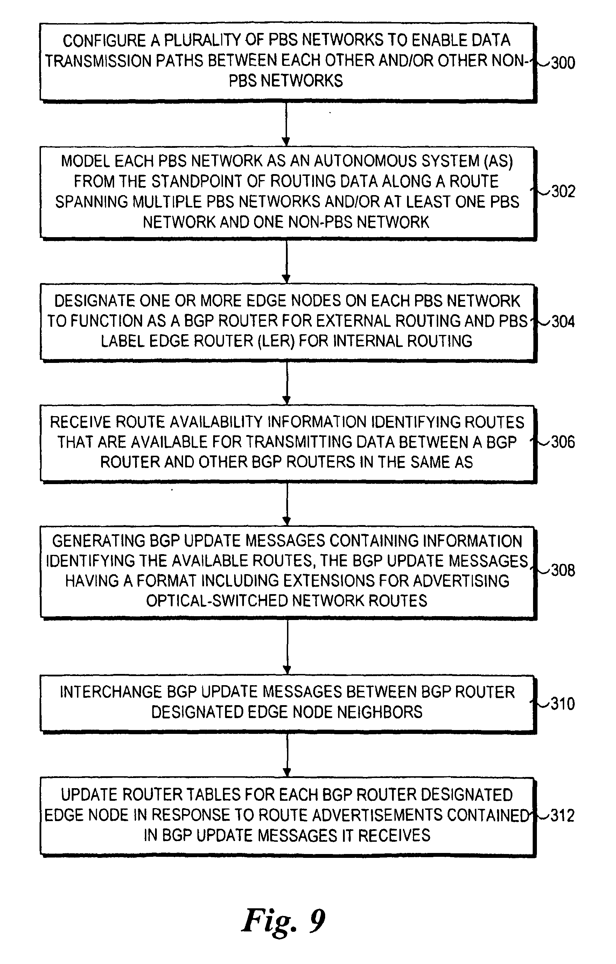

A flowchart summarizing the foregoing setup and network update operations is shown in Figure 9. The setup process begins in a block 300, wherein plurality of PBS networks are configured to enable data transmission paths between each other and/or other non-PBS networks. For example, one could start with PBS networks 110₁₋₅ and LANS 113₁ and 113₂ in Figure 6a, and add communication links 127₁₋₄ and 128₁₋₈ between the various network "islands." In general, the communication links may comprise optical fiber links or wired links. In addition, appropriate transmission equipment (*e.g.*, transceivers) needs to be provided at the ends points of each communication link.

Next, in a block 302, each PBS network is "modeled" as an autonomous system from the standpoint of routing data along a route spanning multiple PBS networks and/or at least PBS network and one or more non-PBS networks. In accordance with this AS modeling, one or more edge nodes on each PBS network are designated to function as BGP routers for external routing and PBS label edge routers (if co-located) for internal routing, as depicted in a block 304.

In a block 306, each BGP router designed node receives route availability information for other nodes within the PBS network it resides identifying routes that are available for transmitting data between that node and other BGP routers in the same AS (*i*.*e*., the same PBS network). What this does is provide routing information identifying the available routes between ingress and egress BGP routers within a given PBS network. Corresponding BGP UPDATE messages containing advertisements for the routes are then generated in a block 308, wherein the BGP UPDATE messages have the path attributes format shown in Figure 8b.

At this point, the BGP update messages including the optical-switched network routing support extensions are interchanged between BGP router neighbors to update the external routing table in each BGP router. These operations are performed in blocks 310 and 312. Each external routing table contains multiple routing records, each specifying a route to a destination network. Specifically, each routing record includes a list of segment hops (*i*.*e*., BGP router addresses) that would be sequentially encountered to reach an ingress node BGP router at the destination network that hosts a destination address. As discussed above, the external routing data do not include any details of the internal routing used within an AS.

Once the enterprise network is configured and initialized (*i*.*e*., BGP routing tables are built), data may be transmitted among different PBS networks and among different PBS networks and non-PBS networks using the extended BGP routing for external routing operations and using the IGP routing mechanism for internal routes within a given PBS network. Thus, the routing is analogous to that employed by the Internet, except for now the routers consider optical-switched network availability information when updating their routing tables in addition to conventional external routing advertisements.

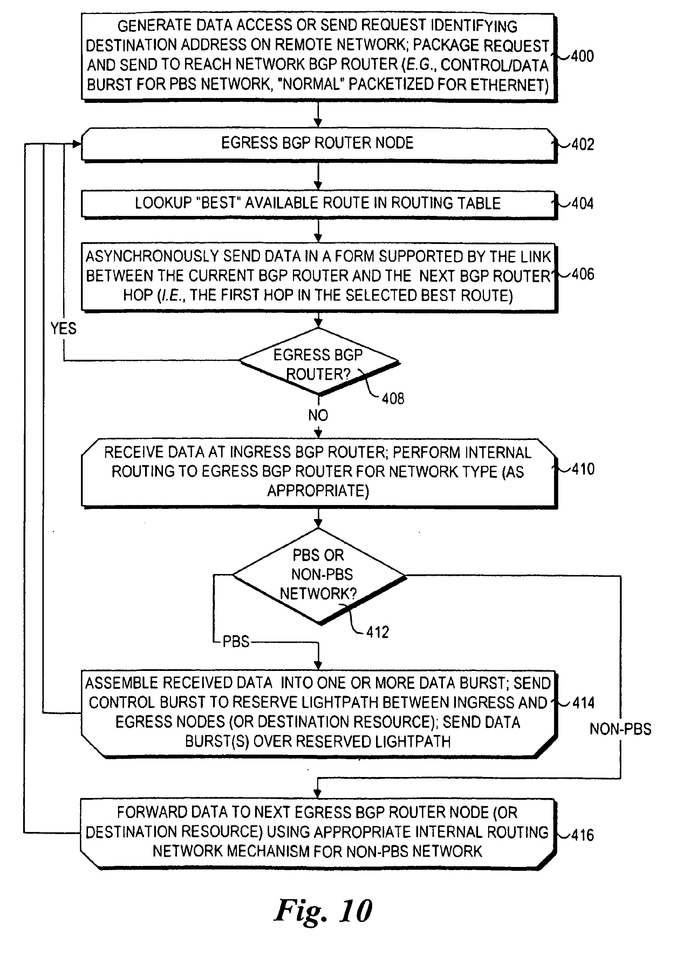

With reference to the flowchart of Figure 10, operations and logic for intra-enterprise network routing across multiple optical-switched and/or non-optical-switched networks proceeds as follows. The process begins in a block 400, wherein a data access or send request identifying a destination on a remote network is generated. For example, suppose the initiating node comprises an internal switching node (not shown) within PBS network 110₅, and the destination address lies internally to PBS network 110₂. The data corresponding to the request are then packaged and sent to reach one of the network's BGP routers. Depending on how the internal network nodes are programmed and function, an internal node may be aware of *local_pref* information that would help the node to determine which BGP router to send the data to in the event that multiple BGP routers are available. For example, PBS network 110₂ may be reached via either BGP router 116₈ or BGP router 116₇; corresponding *local_pref* information may be used to inform internal nodes to PBS network 110₅ which BGP router to send data to base on the destination address for the data.

If the initial network comprises a PBS network, the data will be packaged as one or more data bursts and a corresponding control burst will be sent to reserve the lightpath between the originating node and the selected (or single) BGP router, whereupon the one or more data bursts will be sent over the reserved lightpath. For non-PBS nodes, the data will generally be sent to the BGP router using an appropriate internal routing mechanism, such as using packetized routing via an Ethernet protocol for Ethernet LANs.

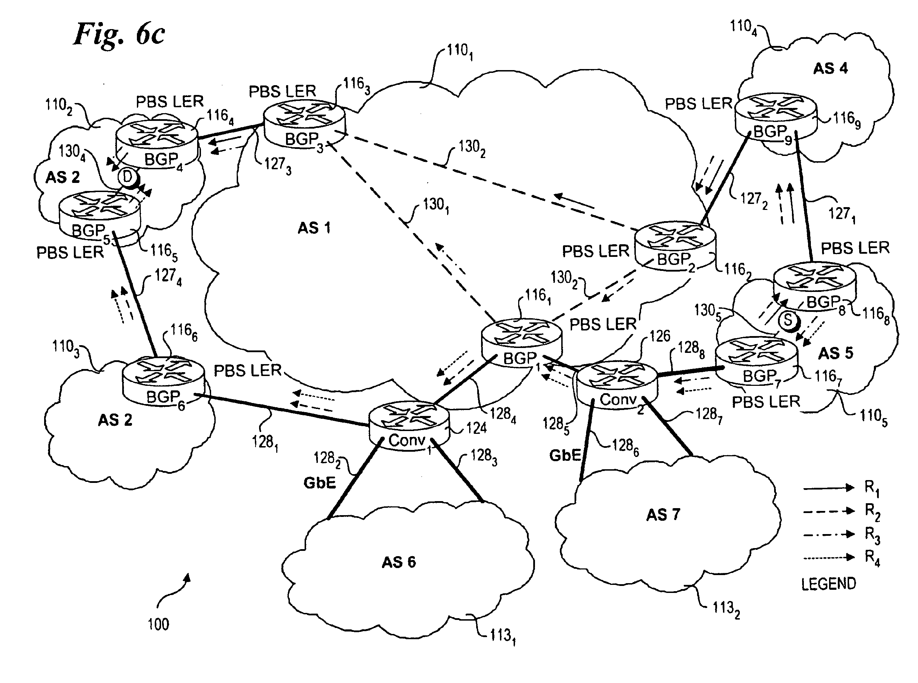

At this point, the data has reached a BGP router egress node, as indicated by a start block 402. In a block 404, the BGP router's decision process, which is using the route selection algorithm, determines the "best" available route to reach the destination address. This selection algorithm typically uses a mixture of different attributes and selection criteria such as the highest LOCAL_PREF, the shortest AS_PATH, and lowest MED, etc to determine which route is best from the available options. For example, there are four primary possible routes between PBS networks 110₅ and 110₂, with endpoints depicted by a source (encircled "S") and destination (encircled "D") in Figure 6c. These include (as identified by respective BGP router hops) route R₁: BGP₈-BGP₉-BGP₂-BGP₃-BGP₄, route R₂: BGP₈-BGP₉-BGP₂-BGP₁-Conv₁-BGP₆-BGP₅, route R₁: BGP7-BGP₁₁-BGP₁-BGP₃-BGP₄, and route R₄: BGP₇-BGP₁₁-BGP₁-Conv1-BGP₆-BGP₅-BGP₄. (It is noted that secondary (*i*.*e*., backup) routes within a given PBS network are abstracted from the routing tables of external networks such that indirect routes between ingress and egress BGP routers are not included; such routes may be implemented internally by an intermediate-hop network, if necessary.) Generally, the best route may be selected based on a function that employs predetermined criteria, such as route length (*e.g.*, number of hops), or other criteria. Route availability will be determined at the time of the request, and will be a function of the real-time data in the routing table of the first egress BGP router.

In a block 406, the data is then sent to the next BGP router "hop", which corresponds to the first hop in the best route that is selected. In accordance with dynamic external routing principles, even though an entire route may be selected, the only portion of that route that is guaranteed to be taken is the first hop. Subsequently, the remaining portion of the route is re-evaluated at each PBS router, as described below.

In general, the data sent between two networks will be transmitted using a transmission protocol conducive to the link type coupling the two networks. For example, if the first network is a PBS network and the second network is a PBS network the data may be sent using a PBS-based transmission mechanism, such as the control burst/data burst scheme discussed above. Optionally, the data may be sent using a conventional protocol, such as an Ethernet-based protocol.

In some instances, the same BGP router (for both PBS and non-PBS networks) may serve as both and ingress and an egress point to the network. Accordingly, in a decision block 408 a determination is made to whether the next hop BGP router is an egress point. If so, the logic loops back to start loop block 402.

If the next hop BGP router comprises an ingress point to the network, the logic proceeds to a start loop block 410 in which data is received at the router, and the internal routing to an appropriate egress BGP router for the network is performed. As indicated by a decision block 412, the type of internal routing that will be employed will depend on whether the network is a PBS network or a non-PBS network. If the network is a PBS network, the logic proceeds to an end loop block 414 in which the received data is assembled into one or more data bursts. A control burst is then sent between the ingress and egress BGP router nodes to reserve a lightpath for a variable timeslot appropriate for successfully transmitting the one or more data bursts. The data bursts are then sent over the reserved lightpath, thus arriving at an egress BGP router node for the route. The logic then loops back to start at block 402 to reflect this condition.

If the network is a non-PBS network or the next hop corresponds to a conventional external router, the logic proceeds to an end loop block 416. In this instance, the data will be routed across the non-PBS network to an appropriate egress BGP router in the non-PBS network or an external router using an appropriate internal routing protocol. For example, an OSPF protocol may be used for an Ethernet LAN, wherein data is transmitted from the ingress to egress BGP router nodes via one or more internal nodes in packetized form using a well-known transmission protocol such as TCP/IP. Once the logic has reached the egress BGP router, the logic loops back to start loop block 402.

The operations of the flowchart of Figure 10 are repeated on a hop-by-hop basis until the network hosting the destination resource D is reached. At this point, the data is routed to the destination resource D using a mechanism appropriate to the hosting network type. For example, a control burst following by one or more data bursts will be employed for a PBS network hosting the destination resource. Otherwise, conventional routing, such as Ethernet routing for an Ethernet network, may be used to reach the destination resource.

As discussed above, both the external and internal routing route selections are made dynamically in an asynchronous manner. At the same time, the route availability for various networks may frequently change, due to changing availability of routes across the PBS networks. Thus, as each BGP router hop is encountered, the best route between that hop and the destination resource is re-evaluated to determine the optimum route to reach the destination resource.

For example, suppose it is initially determined at an internal switching node proximate to source S that route R₁ is the best route for routing data between source S and destination resource D. Thus data will first be routed to BGP router BGP₈, and then to BGP routers BGP₉ and BGP₂, respectively. Further suppose that upon reaching BGP router BGP₂, a determination is made that BGP router BGP₃, which would have been the next hop along route R₁, is unavailable. A dynamic determination is then made generating a new route from among available routes contained in the router table of BGP router BGP₂, wherein the first hop is to BGP router BGP₁. Thus, the data is transmitted between BGP routers BGP₂ and BGP₁ using PBS control/data burst transmission techniques.

Now, the data has reached BGP router BGP₁. As before, a new best route determination is made. In this instance, BGP router BOP₃ may once again be available (along with the rest of the route through BGP router BGP₄). Thus, since this is a shorter route than the other option (routing via the reminder of routes R₂ and R₄), this route would be selected, and the next hop would be BGP router BGP₃. The best route selection process is then repeated along each hop until the destination network is reached.

It is noted that the type of network that host the source and or destination resource may be either a PBS network or non-PBS network. The protocol is substantially the same in either case, with the difference reflected by how the data is routed internally to the first BGP router. The BGP router perspective, both types of networks appear as autonomous systems. PBS LER with co-located BGP router Architecture

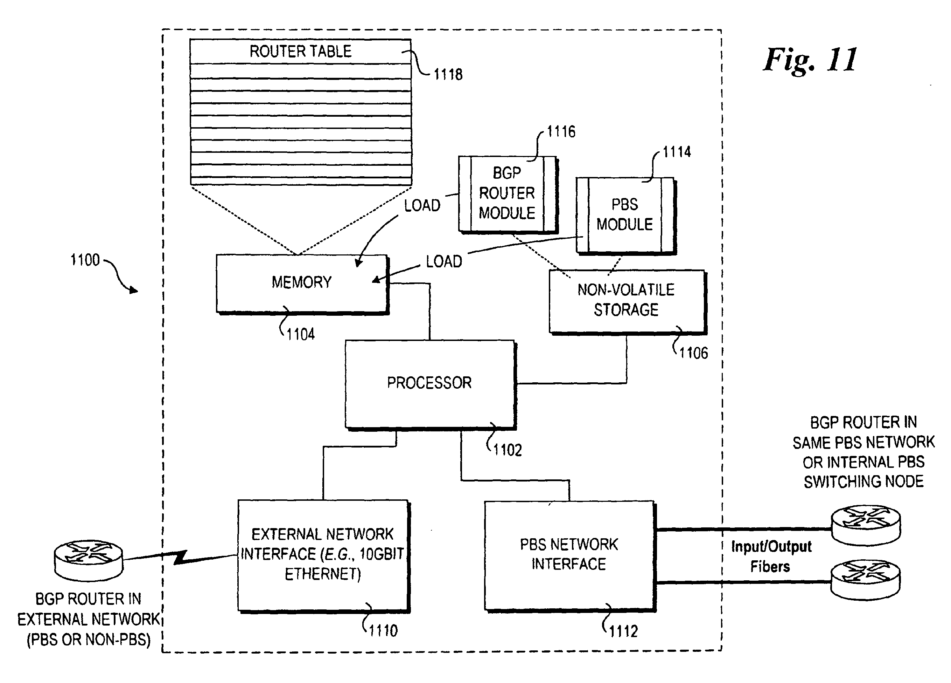

A simplified block diagram 1100 of a PBS LER with co-located BGP router architecture in accordance with one embodiment is shown in Figure 11. The architecture components include a processor 1102, which is coupled in communication with each of a memory 1104, firmware 1106, optional non-volatile storage, an external network interface 1110, and a PBS network interface 1112. External network interface provides functionality for interfacing with an external network, such as a 10 GbE LAN, or another PBS network. PBS network interface 1112 provides functionality for interfacing with the internal infrastructure within a PBS network. The PBS network interface will generally be coupled to one or more fiber links, labeled as input/output fibers in Figure 11 to illustrate that the interface can support both input and output data transmission.

The burst assembly and framing, burst scheduling and control, which are part of the PBS MAC layer and related tasks, are performed by processor 1102 via execution of instructions comprising a PBS module 1114, which is loaded into memory 1104 for execution. In one embodiment, processor 1102 comprises a network processor. Network processors are very powerful processors with flexible micro-architecture that are suitable to support wide-range of packet processing tasks, including classification, metering, policing, congestion avoidance, and traffic scheduling. For example, the Intel® IXP2800 NP, which has 16 microengines, can support the execution of up to 1493 microengines instructions per packet at packet rate of 15 million packets per second for 10 GbE and a clock rate of 1.4 GHz.

The control bursts can be sent either in-band (IB) or out of band (OOB) on separate optical channels. For the OOB case, the optical data bursts are statistically switched at a given wavelength between the input and output ports within a variable time duration by the PBS fabric based on the reserved switch configuration as set dynamically by processor 1102. The processor 1102 is responsible to extract the routing information from the incoming control bursts, providing fix-duration reservation of the PBS switch resources for the requested data bursts, and forming the new outgoing control bursts for the next PBS switching node on the path to the egress node. In addition, the network processor provides overall PBS network management functionality based on then extended GMPLS framework discussed above. For the IB case, both the control and data bursts are transmitted to the PBS switch fabric and control interface unit. However, processor 1102 ignores the incoming data bursts based on the burst payload header information. Similarly, the transmitted control bursts are ignored at the PBS fabric since the switch configuration has not been reserved for them. One advantage of this approach is that it is simpler and cost less to implement since it reduces the number of required wavelengths.

Functionality for performing operations corresponding to the flowcharts of Figure 9 and 10 may be formed by execution of firmware and/or software instructions on processors provided by the BGP router/edge nodes. The instructions for performing these operations are collectively depicted as a BGP router module 1116. Execution of the BGP router module 1116 enables a BGP router/PBS edge node to perform the various BGP router operations discussed herein, including building and updating a router table 1118. In general, the instructions corresponding to BGP router module 1116 and PBS module 1114 may be stored in firmware 1106 or non-volatile storage 1108.

Thus, embodiments of this invention may be used as or to support software program executed upon some form of processing core (such as the CPU of a computer or a processor of a module) or otherwise implemented or realized upon or within a machine-readable medium. A machine-readable medium includes any mechanism for storing or transmitting information in a form readable by a machine (*e.g*., a computer). For example, a machine-readable medium can include such as a read only memory (ROM); a random access memory (RAM); a magnetic disk storage media; an optical storage media; and a flash memory device, *etc.* In addition, a machine-readable medium can include propagated signals such as electrical, optical, acoustical or other form of propagated signals (*e*.*g*., carrier waves, infrared signals, digital signals, *etc*.).

In the foregoing specification, embodiments of the invention have been described. It will, however, be evident that various modifications and changes may be made thereto without departing from the broader spirit and scope as set forth in the appended claims. The specification and drawings are, accordingly, to be regarded in an illustrative rather than a restrictive sense.

The above description of illustrated embodiments of the invention, including what is described in the Abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the claims. Rather, the scope of the invention is to be determined entirely by the following claims, which are to be construed in accordance with established doctrines of claim interpretation.

## Claims

1. A method for routing data across a network (100) including a plurality of optical burst-switched OBS, networks (110), comprising:
receiving a data transmission request from a node (S) in a first network (110₅) identifying a destination node (D) in a second network (110₂), remote from the first network, to where the data is to be transmitted; wherein transmission of the data requires the data to be routed along a route (R₁₋₄) that spans at least of portion of multiple networks, including at least one OBS network (110₁);
employing an external gateway protocol to route the data between egress and ingress nodes (116) of the first, second, and any intermediate networks along the route by exchanging control messages between the first, second and any intermediate networks involved; and
employing (55) an internal routing protocol to route the data through the first and second networks and any intermediate networks along the route,
wherein the external gateway protocol is an extended version of the Border Gate Protocol BGP, and includes provisions for updating (312) an availability of lightpath routing (1118) across said at least one OBS network (110₁) including provisions for updating the availability of physical lightpath routing resources.

2. The method of claim 1, wherein each of the first and second networks (110₅, 110₂) comprise OBS networks.

3. The method of claim 1, wherein the route (R₁₋₄) traverses at least one intermediate network (110₁) comprising an OBS network.

4. The method of claim 1, wherein the first network comprises a non-OBS network (113₁₋₂).

5. The method of claim 1, wherein the second network comprises a non-OBS network (113₁₋₂).

6. The method of claim 1, wherein the OBS network (110₁) comprises a photonic burst-switched PBS, network.

7. The method of claim 1, wherein the OBS network (110₁) comprises a wavelength-division multiplexed WDM PBS network.

8. The method of claim 1, wherein the external gateway protocol comprises an extended version of the Border Gateway Protocol (BGP) that includes provisions for advertising an availability of routes (R₁₋₄) across at least one OBS network (110₁).

9. The method of claim 8, wherein the extended version of the BGP includes an extension to the path attributes in a BGP UPDATE message (206B) to enable advertisement of an availability or non-availability of one or more communication paths (130₁₋₂) between an ingress and egress BGP router (116) in a given OBS network, further comprising:
dynamically updating (312) a routing table (1118) for a BGP router in response to route advertisements contained in a BGP UPDATE message (206B) received by that BGP router.

10. The method of claim 9, wherein the extension to the path attributes in the BGP UPDATE message includes an available wavelength attribute (228) that indicates a status of the current wavelength availability between neighboring OBS networks.

11. The method of claim 9, wherein the extension to the path attributes in the BGP UPDATE message includes an available fiber attribute (230) that indicates a status of the current fiber availability between neighboring OBS networks.

12. The method of claim 9, wherein the extension to the path attributes in the BGP UPDATE message includes a connection attribute (226) that indicates whether a connection to an OBS network is available or not.

13. The method of claim 1, wherein data is routed between networks using a hop-by-hop routing scheme under which current routing information is considered at each hop to determine the next hop.

14. The method of claim 1, further comprising co-locating an OBS label edge router with an external gateway protocol, EGP, router in at least one OBS networks.

15. The method of claim 1, wherein data is routed between networks using a packetized transmission scheme, while data is routed across an OBS network by assembling packetized data into one or more data bursts and sending the one or more data bursts across a lightpath spanning an ingress and egress node of the OBS network.

16. A method comprising:
configuring (300) a plurality of optical burst-switched networks (110) to enable data transmission between each other;
modeling (302) each OBS network as an autonomous system from an external routing standpoint;
designating (304) at least one edge node (116) in each OBS network as a Border Gateway Protocol (BGP) router for external routing between OBS networks and a OBS label edge router LER, for internal routing within a OBS network;
interchanging (310) BGP UPDATE messages (206B) between the edge nodes that are designated as BGP routers, the BGP UPDATE messages including extensions (226, 228, 230) for advertising the availability of OBS network routes including information on the availability of physical lightpath routing resources; and
dynamically updating (312) routing tables (1118) for each BGP router in response to route advertisements contained in the BGP UPDATE messages.

17. The method of claim 16, wherein each OBS network comprises a photonic burst-switched (PBS) network.

18. The method of claim 16, wherein each OBS network comprises a wavelength-division multiplexed PBS network.

19. The method of claim 16, further comprising:
configuring a respective router operatively coupled to at least one non-OBS network to enable data transmissions between said at least one non-OBS network and at least one of the plurality of OBS networks; and
dynamically updating (312) a routing table (1118) for each respective router in response to BGP UPDATE messages received by each respective router.

20. The method of claim 16, wherein said at least one non-OBS network comprises an Ethernet-based network.

21. An apparatus for use in an optical burst-switched network, comprising:
optical switch fabric, having at least one input fiber port and at least one output fiber port; and **characterized by**:
a control unit, operatively coupled to control the optical switch fabric, including at least one processor (1102) and a storage device (1106) operatively coupled to said at least one processor containing machine-executable instructions, which when executed by said at least one processor perform operations to enable the apparatus to function as a External Gateway Protocol router, including:
receiving (306) lightpath route availability information corresponding to an availability of a route that may be used to route data through an OBS network in which the apparatus may be deployed including information on the availability of physical lightpath routing resources;
generating (308) an External Gateway Protocol UPDATE message indicating routing availability identifying an available route for transmitting data through the optical burst-switched network including information on the availability of physical lightpath routing resources; and
sending (310) the EGP UPDATE message to another EGP router that is external to the OBS network in which the apparatus may be deployed to advertise the availability of the route.

22. The apparatus of claim 21, wherein the optical burst-switched network comprises a photonic burst switched (PBS) network.

23. The apparatus of claim 21, wherein the optical burst-switched network comprises a wavelength-division multiplexed PBS network; and the optical switching fabric provides switching of optical signals comprising different wavelengths carried over common fibers that may be respectively coupled to said at least one input fiber port and said at least one output fiber port.

24. The apparatus of claim 21, wherein execution of the mach ine-executable instructions performs the further operations of:
receiving (310) EGP UPDATE messages (206B) from another EGP router that is external to the OBS network containing a route advertisement; and
dynamically updating (312) a routing table (1118) maintained by the EGP router to reflect the availability of a route specified in the route advertisement.

25. The apparatus of claim 24, wherein execution of the machine-executable instructions performs the further operations of:
generating a new EGP UPDATE message (206B) identifying the availability of a new route including route segments contained in an EGP UPDATE message received by the EGP router concatenated with a route segment through the EGP router; and
sending the EGP UPDATE message to another EGP router that is external to the OBS network to advertise the availability of the new route:

26. The apparatus of claim 24, wherein execution of the machine-executable instructions performs the further operations of:
receiving data including a routing request identifying a destination address to which the data is to be routed;
selecting a route from among routing data stored in the routing table that may be used to reach the destination address; and
forwarding the data to a next hop in the route that is selected.

27. The apparatus of claim 26, wherein the apparatus comprises an ingress node (116) at which the data is received, and the data is forwarded to an egress node (116) of the OBS network via execution of the machine-executable instructions to perform operations including:
reserving (22) a lightpath spanning between the ingress node and an egress node that corresponds to the next hop in the route; and
sending (23) the data as one or more data bursts over the lightpath that is reserved.

28. The apparatus of claim 26, wherein the apparatus comprises an egress node (116) at which the data is received, and the data is forwarded to an ingress node (116) of an OBS network that is external from the OBS network in which the apparatus is deployed via execution of the machine-executable instructions to perform operations including:
reserving (22) a lightpath spanning between the egress node and the ingress node of the external OBS network; and
sending (23) the data as one or more data bursts over the lightpath that is reserved.

29. The apparatus of claim 26, wherein the apparatus comprises an egress node (116) at which the data is received, and the data is forwarded to an ingress node (116) of a network that is external from the OBS network in which the apparatus is deployed via execution of the machine-executable instructions to perform operations including:
employing an Ethernet-based protocol to facilitate transmission of the data between the egress node and the ingress node.

30. A machine-readable medium to provide instructions, which when executed by a processor perform all the steps of any of claims 1 to 20.

31. A system comprising:
a plurality of optical burst-switched networks (110) each comprising an apparatus as claimed in any of claims 21 to 29, each optical-switched network including at least one edge node (116) optically coupled to a plurality of switching nodes (117), said at least one edge node configured to perform internal routing of data within the optical-switched network (110) that it is a member of, via a schedule reservation of a lightpath passing from that edge node through at least one of the switching nodes to a destination node comprising one of another edge node or a switching node, further wherein at least one of said at least one edge node comprises an external gateway protocol router configured to externally route data received at that edge node to another EGP router located external from the optical-switched network the EGP router is a member of using an extended version of the Border Gateway Protocol (BGP).

32. The system of claim 31, wherein said plurality of optical-switched networks comprise photonic burst-switched (PBS) networks.

33. The system of claim 31, wherein at least one of the plurality of optical-switched networks includes at least two edge nodes configured as EGP routers.

34. The system of claim 31, wherein at least one of the EGP routers is co-located at an edge node that further comprises a label edge router (LER).

35. The system of claim 31, wherein the external gateway protocol comprises the border gateway protocol.

36. The system of claim 31, further comprising at least one external EGP router located externally from each of the plurality of optical-switched networks.

37. The system of claim 31, further comprising at least one non-optical switched local area network (LAN).

## Patentansprüche

1. Verfahren zum Leitweglenken von Daten über ein Netzwerk (100), das eine Mehrzahl von OBS-Netzwerken (Netzwerken mit optischer Burstvermittlung) (110) aufweist, wobei das Verfahren folgendes umfasst:
das Empfangen einer Datenübermittlungsanforderung von einem Knoten (S) in einem ersten Netzwerk (110₅), die einen Zielknoten (D) in einem zweiten Netzwerk (110₂) identifiziert, das von dem ersten Netzwerk entfernt ist, zu dem die Daten übermittelt werden sollen; wobei es die Übermittlung der Daten voraussetzt, dass die Daten entlang eines Wegs (R₁₋₄) geleitet werden, der zumindest einen Teil der Mehrzahl von Netzwerken abdeckt, einschließlich mindestens einem OBS-Netzwerk (110₁);
das Einsetzen eines externen Gateway-Protokolls zum Leiten der Daten zwischen Ausgangs- und Eingangsknoten (116) des ersten, zweiten und jedes intermediären Netzwerks entlang des Leitwegs, indem Steuernachrichten zwischen den beteiligten ersten, zweiten und allen etwaigen intermediären Netzwerken ausgetauscht werden; und
das Einsetzen (55) eines internen Routing-Protokolls zum Leiten der Daten durch die ersten und zweiten Netzwerke sowie alle etwaigen intermediären Netzwerke entlang des Leitwegs;
wobei es sich bei dem externen Gateway-Protokoll um eine erweiterte Version des Border Gate Protocols (BGP) handelt, mit Vorkehrungen für eine Aktualisierung (312) einer Verfügbarkeit der Lichtweg-Leitweglenkung (1118) über mindestens ein OBS-Netzwerk (110₁), mit Vorkehrungen für eine Aktualisierung der Verfügbarkeit von Ressourcen für eine physische Lichtweg-Leitweglenkung.

2. Verfahren nach Anspruch 1, wobei jedes der ersten und zweiten Netzwerke (110₅, 110₂) OBS-Netzwerke umfasst.

3. Verfahren nach Anspruch 1, wobei der Leitweg (R1-4) mindestens ein intermediäres Netzwerk (110₁) kreuzt, das ein OBS-Netzwerk umfasst.

4. Verfahren nach Anspruch 1, wobei das erste Netzwerk ein Nicht-OBS-Netzwerk (113₁₋₂) umfasst.

5. Verfahren nach Anspruch 1, wobei das zweite Netzwerk ein Nicht-OBS-Netzwerk (113₁₋₂) umfasst.

6. Verfahren nach Anspruch 1, wobei das OBS-Netzwerk (110₁) ein PBS-Netzwerk (Netzwerk mit photonischer Burstvermittlung) umfasst.

7. Verfahren nach Anspruch 1, wobei das OBS-Netzwerk (110₁) ein Wellenlängenmultiplex (WDM) PBS-Netzwerk umfasst.

8. Verfahren nach Anspruch 1, wobei das externe Gateway-Protokoll eine erweiterte Version des Border Gateway Protocols (BGP) umfasst, das Vorkehrungen zum Anzeigen einer Verfügbarkeit von Leitwegen (_{R1-4}) in mindestens einem OBS-Netzwerk (110₁) aufweist.

9. Verfahren nach Anspruch 8, wobei die erweiterte Version des BGP eine Erweiterung der Wegattribute in einer BGP UPDATE-Nachricht (206B) aufweist, um das Anzeigen einer Verfügbarkeit oder Nichtverfügbarkeit eines oder mehrerer Kommunikationswege (130₁₋₂) zwischen einem Eingangs- und Ausgangs-BGP-Router (116) in einem bestimmten OBS-Netzwerk zu ermöglichen, wobei das Verfahren ferner folgendes umfasst:
das dynamische Aktualisieren (312) einer Leitwegtabelle (1118) für einen BGP-Router als Reaktion auf Leitweganzeigen, die in einer BGP UPDATE-Nachricht (206B) enthalten sind, die von dem BGP-Router empfangen wird.

10. Verfahren nach Anspruch 9, wobei die Erweiterung der Wegattribute in der BGP UPDATE-Nachricht ein verfügbares Wellenlängenattribut (228) aufweist, das einen Status der aktuellen Wellenlängenverfügbarkeit zwischen benachbarten OBS-Netzwerken anzeigt.

11. Verfahren nach Anspruch 9, wobei die Erweiterung der Wegattribute in der BGP UPDATE-Nachricht ein verfügbares Faserattribut (230) aufweist, das einen Status einer aktuellen Faserverfügbarkeit zwischen benachbarten OBS-Netzwerken anzeigt.

12. Verfahren nach Anspruch 9, wobei die Erweiterung der Wegattribute in der BGP UPDATE-Nachricht ein Verbindungsattribut (226) aufweist, das anzeigt, ob eine Verbindung mit einem OBS-Netzwerk verfügbar ist oder nicht.

13. Verfahren nach Anspruch 1, wobei Daten zwischen Netzwerken geführt werden unter Verwendung eines Sprung-für-Sprung-Leitwegmodells, gemäß dem aktuelle Leitweginformationen bei jedem Sprung zur Bestimmung des nächsten Sprungs berücksichtigt werden.

14. Verfahren nach Anspruch 1, wobei dieses ferner das gemeinsame Anordnen eines OBS Label Edge Routers in einem EGP-Router (External Gateway Protocol Router) in mindestens einem OBS-Netzwerk umfasst.

15. Verfahren nach Anspruch 1, wobei Daten zwischen Netzwerken unter Verwendung einer Paketübermittlungsmethode geführt werden, während Daten über ein OBS-Netzwerk durch das Zusammensetzen von Paketdaten in ein oder mehrere Daten-Bursts und das Senden des einen oder der mehreren Daten-Bursts über einen Lichtweg geführt werden, der einen Eingangs- und Ausgangsknoten des OBS-Netzwerks abdeckt.

16. Verfahren, das folgendes umfasst:
das Konfigurieren (300) einer Mehrzahl von Netzwerken mit optischer Burstvermittlung (110), um zwischen diesen eine Datenübermittlung zu ermöglichen;
das Modellieren (302) jedes OBS-Netzwerks als ein autonomes System aus externer Routing-Perspektive;
das Benennen (304) mindestens eines Edge-Knotens (116) in jedem OBS-Netzwerk als einen Border Gateway Protocol (BGP) Router für ein externes Routing zwischen OBS-Netzwerken, und eines OBS Label Edge Routers (LER) für das interne Routing innerhalb eines OBS-Netzwerks;
das Austauschen (310) von BGP UPDATE-Nachrichten (206B) zwischen den Edge-Knoten, die als BGP-Router designiert sind, wobei die BGP UPDATE-Nachrichten Erweiterungen (226, 228, 230) zum Anzeigen der Verfügbarkeit von OBS-Netzwerkleitwegen aufweisen, mit Informationen zur Verfügbarkeit von Ressourcen für ein physisches Lichtweg-Routing; und
das dynamische Aktualisieren (312) von Routing-Tabellen (1118) für jeden BGP-Router als Reaktion zur Leitweganzeigen in den BGP UPDATE-Nachrichten.

17. Verfahren nach Anspruch 16, wobei jedes OBS-Netzwerk ein Netzwerk mit photonischer Burstvermittlung (PBS) umfasst.

18. Verfahren nach Anspruch 16, wobei jedes OBS-Netzwerk ein Wellenlängenmultiplex (WDM) PBS-Netzwerk umfasst.

19. Verfahren nach Anspruch 16, wobei dieses ferner folgendes umfasst:
das Konfigurieren eines entsprechenden Routers, der funktionsfähig mit mindestens einem Nicht-OBS-Netzwerk gekoppelt ist, um Datenübermittlungen zwischen dem genannten mindestens einen Nicht-OBS-Netzwerk und mindestens einem der Mehrzahl von OBS-Netzwerke zu ermöglichen; und
das dynamische Aktualisieren (312) einer Leitwegtabelle (1118) für jeden entsprechenden Router als Reaktion auf BGP UPDATE-Nachrichten, die von jedem entsprechenden Router empfangen werden.

20. Verfahren nach Anspruch 16, wobei das genannte mindestens eine Nicht-OBS-Netzwerk ein Netzwerk auf Ethernet-Basis umfasst.

21. Vorrichtung zum Einsatz in einem Netzwerk mit optischer Burstvermittlung, wobei die Vorrichtung folgendes umfasst:
einen optischen Schaltverteiler mit mindestens einem Eingangsfaseranschluss und mindestens einem Ausgangsfaseranschluss; und **gekennzeichnet durch**:
eine Steuereinheit, die funktionsfähig so gekoppelt ist, dass sie den optischen Schaltverteiler steuert, mit mindestens einem Prozessor (1102) und einer Speichervorrichtung (1106), die funktionsfähig mit dem genannten mindestens einen Prozessor gekoppelt ist, der maschinenausführbare Anweisungen aufweist, die bei einer Ausführung **durch** den genannten mindestens einen Prozessor Operationen ausführen, die es ermöglichen, dass die Vorrichtung als ein External Gateway Protocol Router arbeitet, wobei dies folgendes aufweist:
das Empfangen (306) von Lichtweg-Leitwegverfügbarkeitsinformationen, die einer Verfügbarkeit eines Leitwegs entsprechen, der zum Leiten von Daten **durch** ein OBS-Netzwerk verwendet werden kann, wobei die Vorrichtung eingesetzt werden kann mit Informationen in Bezug auf die Verfügbarkeit von Ressourcen für eine physische Lichtweg-Leitweglenkung;
das Erzeugen (308) einer External Gateway Protocol UPDATE-Nachricht, welche die Verfügbarkeit von Leitwegen anzeigt, wobei ein verfügbarer Leitweg für die Datenübermittlung **durch** das Netzwerk mit optischer Burstvermittlung angezeigt wird, mit Informationen zur Verfügbarkeit von Ressourcen für eine physische Lichtweg-Leitweglenkung; und
das Senden (310) der EGP UPDATE-Nachricht an einen anderen EGP-Router, der sich außerhalb des OBS-Netzwerks befindet, in dem die Vorrichtung eingesetzt werden kann, um die Verfügbarkeit des Leitwegs anzuzeigen.

22. Vorrichtung nach Anspruch 21, wobei das Netzwerk mit optischer Burstvermittlung ein Netzwerk mit photonischer Burstvermittlung (PBS) umfasst.

23. Vorrichtung nach Anspruch 21, wobei das Netzwerk mit optischer Burstvermittlung ein Wellenlängenmultiplex-PBS-Netzwerk umfasst; und wobei der optische Schaltverteiler für die Schaltverteilung optischer Signale sorgt, die unterschiedliche Wellenlängen umfassen und über gemeinsame Fasern übertragen werden, die entsprechend mit dem genannten mindestens einen Eingangsfaseranschluss und dem genannten mindestens einen Ausgangsfaseranschluss gekoppelt werden können.

24. Vorrichtung nach Anspruch 21, wobei die Ausführung der maschinenausführbaren Anweisungen die folgenden weiteren Operationen ausführt:
das Empfangen (310) von EGP UPDATE-Nachrichten (206B) von einem anderen EGP-Router, der sich außerhalb des OBS-Netzwerks befindet, mit einer Leitweganzeige; und
das dynamische Aktualisieren (312) einer Leitwegtabelle (1118), die von dem EGP-Router verwaltet wird, um die Verfügbarkeit eines Leitwegs anzuzeigen, der in der Leitweganzeige spezifiziert ist.

25. Vorrichtung nach Anspruch 24, wobei die Ausführung der maschinenausführbaren Anweisungen die folgenden weiteren Operationen ausführt:
das Erzeugen einer neuen EGP UPDATE-Nachricht (206B), welche die Verfügbarkeit eines neuen Leitwegs identifiziert, mit Leitwegabschnitten, die in einer EGP UPDATE-Nachricht, die von dem EGP-Router empfangen wird, enthalten sind, verknüpft mit einem Leitwegabschnitt über den EGP-Router; und
das Senden der EGP UPDATE-Nachricht z einem anderen EGP-Router, der sich außerhalb des OBS-Netzwerks befindet, zum Anzeigen der Verfügbarkeit des neuen Leitwegs.

26. Vorrichtung nach Anspruch 24, wobei die Ausführung der maschinenausführbaren Anweisungen die folgenden weiteren Operationen ausführt:
das Empfangen von Daten, die eine Routing-Anforderung aufweisen, welche eine Zieladresse identifiziert, zu der die Daten geleitet werden sollen;
das Auswählen eines Leitwegs aus den in der Leitwegtabelle gespeicherten Leitwegdaten, der eingesetzt werden kann, um die Zieladresse zu erreichen; und
das Weiterleiten der Daten an einen nächsten Sprung in dem ausgewählten Leitweg.

27. Vorrichtung nach Anspruch 26, wobei die Vorrichtung einen Eingangsknoten (116) umfasst, an dem die Daten empfangen werden, und wobei die Daten über Ausführung der maschinenausführbaren Anweisungen zu einem Ausgangsknoten (116) des OBS-Netzwerks weitergeleitet werden zum Ausführen folgender Operationen:
das Reservieren (22) eines Lichtwegs, der zwischen dem Eingangsknoten und einem Ausgangsknoten verläuft, der dem nächsten Sprung auf dem Leitweg entspricht; und
das Senden (23) der Daten als ein oder mehrere Daten-Bursts über den reservierten Lichtweg.

28. Vorrichtung nach Anspruch 26, wobei die Vorrichtung einen Ausgangsknoten (116) umfasst, an dem die Daten empfangen werden, und wobei die Daten zu einem Eingangsknoten (116) eines OBS-Netzwerks weitergeleitet werden, dass sich außerhalb des OBS-Netzwerks befindet, in dem die Vorrichtung eingesetzt wird, über das Ausführen der maschinenausführbaren Anweisungen zum Ausführen folgender Operationen:
das Reservieren (22) eines Lichtwegs, der zwischen dem Ausgangsknoten und dem Eingangsknoten des externen OBS-Netzwerks verläuft; und
das Senden (23) der Daten als ein oder mehrere Daten-Bursts über den reservierten Lichtweg.

29. Vorrichtung nach Anspruch 26, wobei die Vorrichtung einen Ausgangsknoten (116) umfasst, an dem die Daten empfangen werden, und wobei die Daten zu einem Eingangsknoten (116) eines Netzwerks weitergeleitet werden, das sich außerhalb des OBS-Netzwerks befindet, in dem die Vorrichtung eingesetzt wird, über das Ausführen der maschinenausführbaren Anweisungen zum Ausführen folgender Operationen:
das Einsetzen eines Ethernet-basierten Protokolls, um die Übermittlung der Daten zwischen dem Ausgangsknoten und dem Eingangsknoten zu erleichtern.

30. Maschinenlesbares Medium zum Bereitstellen von Anweisungen, die bei einer Ausführung durch einen Prozessor alle Schritte jedes der Ansprüche 1 bis 20 ausführen.

31. System, das folgendes umfasst:
eine Mehrzahl von Netzwerken mit optischer Burstvermittlung (110), die jeweils eine Vorrichtung nach einem der Ansprüche 2 bis 29 umfassen, wobei jedes Netzwerk mit optischer Burstvermittlung mindestens einen Edge-Knoten (116) aufweist, der optisch mit einer Mehrzahl von Schaltknoten (117) gekoppelt ist, wobei der genannte mindestens eines Edge-Knoten so konfiguriert ist, dass er ein internes Routing der Daten in dem optisch vermittelten Netzwerk (110) ausführt, dessen Mitglied er ist, über eine vorgegebene Reservierung eines Lichtwegs, der von diesem Edge-Knoten durch mindestens einen der Schaltknoten zu einem Zielknoten verläuft, der einen weiteren Edge-Knoten oder einen Schaltknoten umfasst, wobei ferner mindestens einer der genannten mindestens einen Edge-Knoten einen External Gateway Protocol Router umfasst, der so konfiguriert ist, dass er an dem Edge-Knoten empfangene Daten extern zu einem anderen EGP-Router leitet, der außerhalb des Netzwerks mit optischer Burstvermittlung angeordnet ist, dessen Mitglied er ist, unter Verwendung einer erweiterten Version des Border Gateway Protocols (BGP).

32. System nach Anspruch 31, wobei die genannte Mehrzahl von Netzwerken mit optischer Burstvermittlung Netzwerke mit photonischer Burstvermittlung (PBS-Netzwerke) umfasst.

33. System nach Anspruch 31, wobei mindestens ein Netzwerk der Mehrzahl von Netzwerken mit optischer Burstvermittlung mindestens zwei Edge-Knoten umfasst, die als EGP-Router konfiguriert sind.

34. System nach Anspruch 31, wobei mindestens einer der EGP-Router eine Kolokation an einem Edge-Knoten aufweist, der ferner einen Label Edge Router (LER) umfasst.

35. System nach Anspruch 31, wobei das External Gateway Protocol das Border Gateway Protocol umfasst.

36. System nach Anspruch 31, wobei dieses ferner mindestens einen externen EGP-Router umfasst, der außerhalb jedes Netzwerks der Mehrzahl von Netzwerken mit optischer Burstvermittlung angeordnet ist.

37. System nach Anspruch 31, wobei dieses ferner mindestens ein Local Area Network (LAN) ohne optische Vermittlung umfasst.

## Revendications

1. Procédé pour router des données à travers un réseau (100) comprenant une pluralité de réseaux à commutation optique par rafales (en anglais « Optical Burst-Switched » - OBS) (110), comprenant les étapes consistant à :
recevoir une requête de transmission de données d'un noeud (S) dans un premier réseau (110₅) identifiant un noeud de destination (D) dans un second réseau (110₂), distant du premier réseau (110₅), auquel les données doivent être transmises ; dans lequel la transmission des données requiert que les données soient routées le long d'une route (R₁₋₄) qui s'étend sur au moins une partie de multiples réseaux, y compris au moins un réseau OBS (110₁) ;
utiliser un protocole de passerelle extérieure pour router les données entre les noeuds de sortie et d'entrée (116) des premier et second réseaux et de tout réseau intermédiaire le long de la route en échangeant des messages de commande entre les premier et second réseaux et tout réseau intermédiaire impliqués ; et
utiliser (55) un protocole de routage interne pour router les données à travers les premier et second réseaux et tout réseau intermédiaire le long de la route,
dans lequel le protocole de passerelle extérieure est une version étendue du protocole de passerelle frontière (en anglais « Border Gate Protocol » - BGP) et comprend des dispositions pour mettre à jour (312) une disponibilité de routage de chemin optique (1118) à travers ledit au moins un réseau OBS (110₁) y compris des dispositions pour mettre à jour la disponibilité des ressources physiques de routage de chemin optique.

2. Procédé selon la revendication 1, dans lequel chacun des premier et second réseaux (110₅, 110₂) comprend des réseaux OBS.

3. Procédé selon la revendication 1, dans lequel la route (R₁₋₄) traverse au moins un réseau intermédiaire (110₁) comprenant un réseau OBS.

4. Procédé selon la revendication 1, dans lequel le premier réseau comprend un réseau non-OBS (113₁₋₂).

5. Procédé selon la revendication 1, dans lequel le second réseau comprend un réseau non-OBS (113₁₋₂).

6. Procédé selon la revendication 1, dans lequel le réseau OBS (110₁) comprend un réseau photonique à commutation par rafales (en anglais « Photonic Burst-Switched » - PBS).

7. Procédé selon la revendication 1, dans lequel le réseau OBS (110₁) comprend un réseau PBS multiplexé par répartition en longueur d'onde (en anglais « Wavelength-Division Multiplexed » - WDM).

8. Procédé selon la revendication 1, dans lequel le protocole de passerelle extérieure comprend une version étendue du protocole de passerelle frontière (en anglais « Border Gate Protocol » - BGP) qui comprend des dispositions pour signaler la disponibilité de routes (R₁₋₄à travers au moins un réseau OBS (110₁).

9. Procédé selon la revendication 8, dans lequel la version étendue du BGP comprend une extension vers les attributs de chemin dans un message BGP UPDATE (206B) pour permettre la signalisation d'une disponibilité ou non-disponibilité d'un ou de plusieurs chemins de communication (130₁₋₂) entre un routeur BGP d'entrée et de sortie (116) dans un réseau OBS donné, comprenant en outre l'étape consistant à :
mettre à jour de façon dynamique (312) une table de routage (1118) pour un routeur BGP en réponse aux signalisations de route contenues dans un message BGP UPDATE (206B) reçu par ce routeur BGP.

10. Procédé selon la revendication 9, dans lequel l'extension vers les attributs de chemin dans le message BGP UPDATE comprend un attribut de longueur d'onde disponible (228) qui indique un état de la disponibilité de longueur d'onde actuelle entre des réseaux OBS voisins.

11. Procédé selon la revendication 9, dans lequel l'extension vers les attributs de chemin dans le message BGP UPDATE comprend un attribut de fibre disponible (230) qui indique un état de la disponibilité de fibre actuelle entre des réseaux OBS voisins.

12. Procédé selon la revendication 9, dans lequel l'extension vers les attributs de chemin dans le message BGP UPDATE comprend un attribut de connexion (226) qui indique si une connexion à un réseau OBS est disponible ou non.

13. Procédé selon la revendication 1, dans lequel les données sont routées entre des réseaux en utilisant un plan de routage saut par saut en vertu duquel les informations de routage actuelles sont prises en compte à chaque saut pour déterminer le saut suivant.

14. Procédé selon la revendication 1, comprenant en outre l'étape consistant à co-localiser un routeur de périphérie de label OBS avec un routeur à protocole de passerelle extérieure (en anglais « External Gateway Protocol » - EGP), dans au moins un réseau OBS.

15. Procédé selon la revendication 1, dans lequel les données sont routées entre des réseaux en utilisant un plan de transmission par paquets, par lequel les données sont routées à travers un réseau OBS en assemblant des données en paquets en une ou plusieurs rafales de données et en envoyant la ou les rafales de données à travers un chemin optique s'étendant sur un noeud d'entrée et de sortie du réseau OBS.

16. Procédé comprenant les étapes consistant à :
configurer (300) une pluralité de réseaux à commutation optique par rafales (110) pour permettre la transmission de données entre eux ;
modéliser (302) chaque réseau OBS comme un système autonome à partir d'un point de routage externe ;
désigner (304) au moins un noeud frontière (116) dans chaque réseau OBS comme routeur à protocole de passerelle frontière (en anglais « Border Gateway Protocol » - BGP) pour le routage externe entre les réseaux OBS et un routeur de périphérie de label (en anglais « Label Edge Router » - LER) OBS pour le routage interne dans un réseau OBS ;
échanger (310) des messages BGP UPDATE (206B) entre les noeuds frontières qui sont désignés comme routeurs BGP, les messages BGP UPDATE comprenant des extensions (226, 228, 230) pour signaler la disponibilité de routes de réseau OBS y compris des informations sur la disponibilité de ressources physiques de routage de chemin optique ; et
mettre à jour de façon dynamique (312) des tables de routage (1118) pour chaque routeur BGP en réponse aux signalisations de route contenues dans les messages BGP UPDATE.

17. Procédé selon la revendication 16, dans lequel chaque réseau OBS comprend un réseau photonique à commutation par rafales (en anglais « Photonic Burst-Switched » - PBS).

18. Procédé selon la revendication 16, dans lequel chaque réseau OBS comprend un réseau PBS multiplexé par répartition en longueur d'onde.

19. Procédé selon la revendication 16, comprenant en outre les étapes consistant à :
configurer un router respectif couplé de façon opérationnelle à au moins un réseau non-OBS pour permettre la transmissions de données entre ledit au moins un réseau non-OBS et au moins un de la pluralité de réseaux OBS ; et
mettre à jour de façon dynamique (312) une table de routage (1118) pour chaque routeur respectif en réponse aux messages BGP UPDATE reçus par chaque routeur respectif.

20. Procédé selon la revendication 16, dans lequel ledit au moins un réseau non-OBS comprend un réseau basé sur Ethernet.

21. Appareil à utiliser dans un réseau à commutation optique par rafales, comprenant :
une matrice de commutation optique, ayant au moins un port à fibre d'entrée et au moins un port à fibre de sortie ; et **caractérisé par**
une unité de commande, couplée de façon opérationnelle à la matrice de commutation optique, comprenant au moins un processeur (1102) et un dispositif de stockage (1106) couplé de façon opérationnelle audit au moins un processeur contenant des instructions exécutables par machine, qui lorsqu'elles sont exécutées par ledit au moins un processeur effectuent des opérations pour permettre à l'appareil de fonctionner comme un routeur à protocole de passerelle extérieure, y compris :
recevoir (306) des informations sur la disponibilité des routes de chemin optique correspondant à une disponibilité d'une route pouvant être utilisée pour router les données à travers un réseau OBS dans lequel l'appareil peut être déployé, y compris des informations sur la disponibilité des ressources physiques de routage de chemin optique ;
générer (308) un message External Gateway Protocol UPDATE indiquant la disponibilité de routage en identifiant une route disponible pour transmettre les données à travers le réseau à commutation optique par rafales y compris des informations sur la disponibilité des ressources physiques de routage de chemin optique ; et
envoyer (310) le message EGP UPDATE à un autre routeur EGP qui est externe au réseau OBS dans lequel l'appareil peut être déployé pour signaler la disponibilité de la route.

22. Appareil selon la revendication 21, dans lequel le réseau à commutation optique par rafales comprend un réseau photonique à commutation par rafales (en anglais « Photonic Burst Switched » - PBS).

23. Appareil selon la revendication 21, dans lequel le réseau à commutation optique par rafales comprend un réseau PBS multiplexé par répartition en longueur d'onde ; et la matrice de commutation optique assure la commutation des signaux optiques comprenant différentes longueurs d'onde portées sur des fibres communes pouvant être respectivement couplées audit au moins un port à fibre d'entrée et audit au moins un port à fibre de sortie.

24. Appareil selon la revendication 21, dans lequel l'exécution des instructions exécutables par machine effectue les autres opérations consistant à :
recevoir (310) des messages EGP UPDATE (206B) d'un autre routeur EGP qui est externe au réseau OBS contenant une signalisation de route ; et
mettre à jour de façon dynamique (312) une table de routage (1118) gérée par le routeur EGP pour refléter la disponibilité d'une route spécifiée dans la signalisation de route.

25. Appareil selon la revendication 24, dans lequel l'exécution des instructions exécutables par machine effectue les autres opérations consistant à :
générer un nouveau message EGP UPDATE (206B) identifiant la disponibilité d'une nouvelle route incluant des segments de route contenus dans un message EGP UPDATE reçu par le routeur EGP concaténés avec un segment de route à travers le routeur EGP ; et
envoyer le message EGP UPDATE à un autre routeur EGP qui est externe au réseau OBS pour signaler la disponibilité de la nouvelle route.

26. Appareil selon la revendication 24, dans lequel l'exécution des instructions exécutables par machine effectue les autres opérations consistant à :
recevoir des données y compris une requête de routage identifiant une adresse de destination à laquelle les données doivent être routées ;
sélectionner une route parmi les données de routage stockées dans la table de routage pouvant être utilisée pour atteindre l'adresse de destination ; et
transmettre les données à un saut suivant dans la route qui est sélectionnée.

27. Appareil selon la revendication 26, dans lequel l'appareil comprend un noeud d'entrée (116) au niveau duquel les données sont reçues, et les données sont transmises à un noeud de sortie (116) du réseau OBS via l'exécution des instructions exécutables par machine pour effectuer les opérations consistant à :
réserver (22) un chemin optique allant du noeud d'entrée au noeud de sortie qui correspond au saut suivant dans la route ; et
envoyer (23) les données comme une ou plusieurs rafales de données sur le chemin optique qui est réservé.

28. Appareil selon la revendication 26, dans lequel l'appareil comprend un noeud de sortie (116) au niveau duquel les données sont reçues, et les données sont transmises à un noeud d'entrée (116) d'un réseau OBS qui est externe au réseau OBS dans lequel l'appareil est déployé via l'exécution des instructions exécutables par machine pour effectuer les opérations consistant à :
réserver (22) un chemin optique allant du noeud de sortie au noeud d'entrée du réseau OBS externe ; et
envoyer (23) les données comme une ou plusieurs rafales de données sur le chemin optique qui est réservé.

29. Appareil selon la revendication 26, dans lequel l'appareil comprend un noeud de sortie (116) au niveau duquel les données sont reçues, et les données sont transmises à un noeud d'entrée (116) d'un réseau qui est externe au réseau OBS dans lequel l'appareil est déployé via l'exécution des instructions exécutables par machine pour effectuer les opérations consistant à :
utiliser un protocole basé sur Ethernet pour faciliter la transmission des données entre le noeud de sortie et le noeud d'entrée.

30. Support lisible par machine pour fournir des instructions, qui lorsqu'elles sont exécutées par un processeur effectuent toutes les étapes de l'une quelconque des revendications 1 à 20.

31. Système comprenant :
une pluralité de réseaux à commutation optique par rafales (110) chacun comprenant un appareil selon l'une quelconque des revendications 21 à 29, chaque réseau à commutation optique comprenant au moins un noeud frontière (116) couplé de façon optique à une pluralité de noeuds de commutation (117), ledit au moins un noeud frontière étant configuré pour effectuer le routage interne de données dans le réseau à commutation optique (110) dont il est membre, via une réservation programmée d'un chemin optique passant depuis ce noeud de nord à travers au moins l'un des noeuds de commutation vers un noeud de destination comprenant l'un d'un autre noeud frontière ou un noeud de commutation, en outre dans lequel au moins l'un dudit au moins un noeud frontière comprend un routeur à protocole de passerelle extérieure configuré pour router de façon externe les données reçues au niveau du noeud frontière vers un autre routeur EGP situé à l'extérieur du réseau à commutation optique dont le routeur EGP est membre en utilisant une version étendue du protocole de passerelle frontière (en anglais « Border Gateway Protocol » - BGP).

32. Système selon la revendication 31, dans lequel ladite pluralité de réseaux à commutation optique comprend des réseaux photoniques à commutation par rafales (en anglais « Photonic Burst-Switched » - PBS).

33. Système selon la revendication 31, dans lequel au moins l'une de la pluralité de réseaux à commutation optique inclut au moins deux noeuds frontières configurés comme routeurs EGP.

34. Système selon la revendication 31, dans lequel au moins l'un des routeurs EGP est co-localisé au niveau d'un noeud frontière qui comprend en outre un routeur de périphérie de label (en anglais « Label Edge Router » - LER).

35. Système selon la revendication 31, dans lequel le protocole de passerelle extérieure comprend le protocole de passerelle frontière.

36. Système selon la revendication 31, comprenant en outre au moins un routeur EGP externe situé à l'extérieur de chacun de la pluralité de réseaux à commutation optique.

37. Système selon la revendication 31, comprenant en outre au moins un réseau local d'entreprise (en anglais « Local Area Network » - LAN) à commutation non-optique.
